(19) Europäisches Patentamt

European Patent Office

Office européen des brevets

(11) **EP 0 750 266 B1**

(12) **EUROPEAN PATENT SPECIFICATION**

(45) Date of publication and mention
of the grant of the patent:
**20.06.2001 Bulletin 2001/25**

(51) Int Cl.⁷: **G06F 17/30**

(21) Application number: **96302992.1**

(22) Date of filing: **29.04.1996**

(54) **Document classification unit and document retrieval unit**

Dokumentklassifizierungseinheit und Dokumentwiederauffindungseinheit

Unité de classement de documents et unité de recouvrement de documents

(84) Designated Contracting States:
**DE FR GB**

(30) Priority: **19.06.1995 JP 15164095**

(43) Date of publication of application:
**27.12.1996 Bulletin 1996/52**

(73) Proprietor: **SHARP KABUSHIKI KAISHA**
**Osaka-shi, Osaka-fu 545-0013 (JP)**

(72) Inventor: **Yuasa, Natsuki**
**Tokyo (JP)**

(74) Representative: **Brown, Kenneth Richard et al**
**R.G.C. Jenkins & Co.**
**26 Caxton Street**
**London SW1H 0RJ (GB)**

(56) References cited:
**WO-A-88/04454**          **US-A- 5 301 109**
**US-A- 5 317 507**

• **PATENT ABSTRACTS OF JAPAN vol. 95, no. 005**
**& JP-A-07 114572 (SHARP CORP), 2 May 1995,**

**Description**

BACKGROUND OF THE INVENTION

1. Field of the Invention

The present invention relates to a document classification unit for classifying documents or electronic mails and a document retrieval unit for taking out necessary information from a large amount of document data. The units of the present invention are also utilized in the field of a word processor and a filing system. Further, any language can be used without discrimination.

2. Description of the Related Art

As a method of automatically classifying a document, there is, for example, Tamura et al, "automatic document classification by a statistical method" (Information Processing Society of Japan, the 36th national meeting thesis collection, 1987), a "document classification unit" disclosed in Japanese Patent Application Laying Open (KOKAI) No. 2-158871, or a "document classification method and system" disclosed in Japanese Patent Application Laying Open (KOKAI) No. 6-348755. Tamura's method is a method where a $\chi^2$-value is obtained as an index representative of a deviation in an occurrence frequency of keywords of a field and where a document is classified with the $\chi^2$-value. In this method, since a deviation in an occurrence frequency of keywords is used, there is a need for a human to classify sample data into fields in advance and calculate a $\chi^2$-value and to prepare data for classification. On the other hand, in the "document classification unit" disclosed in Japanese Patent Application Laying Open (KOKAI) No. 2-158871, there is no need to classify sample data into fields in advance, but there is a need for a human to register thesaurus or keyword classification items for document classification in advance. Also, in the "document classification method and system" disclosed in Japanese Patent Application Laying Open (KOKAI) No. 6-348755, there is no need to register thesaurus or keyword classification items for document classification, but there is a need to prepare classified document data where one classification includes more than one-document data.

In the conventional document classification methods, there is a need for a human to classify sample data into fields or a need for a human to register thesaurus or keyword classification items for document classification, and consequently, there was the problem that some hands are required when classification is performed. In the "document classification method and system" disclosed in Japanese Patent Application Laying Open (KOKAI) No. 6-348755, required labor is relatively less because one classification requires one-document data only. However, there is a need for preparing a large amount of classified document data in order to enhance classification accuracy.

In addition, all consideration that the conventional document methods have given is that a document of the same language is classified (if Japanese, a Japanese document is classified).

JP-A-07114572 discloses a document classification unit the operation of which includes the steps of word analysing a document to be classified, automatically generating for each analysed word a word feature vector using concurrent relations between words, storing the generated feature vectors, generating a document feature vector from the word feature vectors of words in the document, storing the word feature vectors and classifying the document by comparison of the document feature vectors.

US-A-5301109 discloses a computer-based system for information retrieval in which a request in one language can be used for retrieval of documents which relate to the request and which are in other languages. The computer system is taught by taking out of an information file of stored data objects a set of training data objects, translating them into multiple languages, storing the translations and then processing the translation sets by merging, parsing and further manipulation steps to create a so-called semantic space. Retrieval involves parsing and mathematically processing a user-query so as to place the query into the semantic space and to determine similarity between the query parameters and the data objects in the semantic space.

WO 88/04454 discloses another computerised information retrieval system.

An object of the present invention, in order to solve the aforementioned problems, is to provide a unit where, merely by preparing data or document data in an unclassified state, a characteristic vector used for classification is automatically generated from a frequency of occurrence in the document data and where an unknown document is automatically classified by using the characteristic vector. Because word data or document data are used in the unclassified state, any human intervention is not required. Further, the unit of the present invention is capable of performing document classification independent of a language. Another unit of the present invention is capable of performing document retrieval independent of language.

## SUMMARY OF THE INVENTION

In one aspect, the present invention provides a document classification unit for classifying a document in accordance with the contents thereof, comprising: a document storage section for storing document data; a characteristic vector generation dictionary including dictionaries of a plurality of different languages, each dictionary having registered therein previously determined words and corresponding conceptual identifiers, words in the different languages and of the same conception being associated in the dictionaries with the same conceptual identifier; a document analysis section for analyzing words of stored document data by using the words of said characteristic vector generation dictionary; a conceptual vector generation section for converting the words of the document data into conceptual identifiers by using the conceptual identifiers of said characteristic vector generation dictionary, words in any of said different languages and of the same conception being converted into the same conceptual identifier, and, based on the cooccurrence relationship between the conceptual identifiers, automatically generating characteristic vectors of the conceptual identifiers; a conceptual vector storage section for storing the generated characteristic vectors of the conceptual identifiers; a document vector generation section for generating a characteristic vector of the document from the characteristic vectors of the conceptual identifiers; a document vector storage section for storing the characteristic vector of the document; a classification section operable in any of said plurality of languages for classifying a said document by making use of the degree of similarity between the characteristic vectors of documents; and a result storage section for storing a result of the classification.

In the document classification unit of the claimed invention, a document is learned and then the document is classified based on the learning. In the learning of the document, the contents of the document data of an object of learning, stored in the document storage section are transmitted to the document analysis section, and the analysis of the document is performed by using the word of the characteristic vector generation dictionary. Then, in the conceptual vector generation section, the words of the document data are converted into conceptual identifiers by using the conceptual identifiers of the characteristic vector generation dictionary and, based on the cooccurrence relationship between the conceptual identifiers, the characteristic vectors of the conceptual identifiers representative of the features of the conceptual identifiers are automatically generated. The characteristic vectors of the conceptual identifiers generated in this way are stored in the conceptual vector storage section. In the classification of the document, the contents of the document data of an object of classification, stored in the document storage section, are transmitted to the document analysis section, and the analysis of the document is performed by using the words of the characteristic vector generation dictionary. Then, in the document vector generation section, the characteristic vector of the document is generated from the conceptual identifiers registered in the conceptual vector storage section. The characteristic vector of the document generated in this way is stored in the document vector storage section. In the classification section, the document is classified by the degree of similarity between the characteristic vectors of documents. The result of the classification is stored in the result storage section.

The document classification unit may further include a useful conceptual-identifier selection section for obtaining a frequency of occurrence of the conceptual identifier for each classification stored in the result storage section, selecting the conceptual identifier useful for classification, and registering the useful conceptual identifier in the characteristic vector generation dictionary. Therefore, the storage space of the characteristic vectors can be reduced and classification accuracy is enhanced, by using the conceptual identifier useful for classification.

The document classification unit may further include: a representative vector generation section for obtaining a characteristic vector of a representative document of each classification stored in the result storage section by using at least either the characteristic vector of the conceptual identifier or the characteristic vector of the document; and a representative vector storage section for storing the characteristic vector of the representative document. Therefore, if the representative vector of each classification group is generated once, the classification group that a document belongs to can be judged by merely comparing the characteristic vector of the document with the representative vector of each classification group when the document is classified.

In another aspect, the present invention provides a document retrieval unit, comprising: a document storage section for storing document data; a retrieval sentence input section for inputting a retrieval sentence; a characteristic vector generation dictionary including dictionaries of a plurality of different languages, each dictionary having registered therein previously determined words and corresponding conceptual identifiers, words in the different languages and of the same conception being associated in the dictionaries with the same conceptual identifier; a document analysis section for analyzing words of stored document data by using the words of said characteristic vector generation dictionary; a conceptual vector generation section for converting the words of the document data into conceptual identifiers by using the conceptual identifiers of said characteristic vector generation dictionary, words in any of said different languages and of the same conception being converted into the same conceptual identifier, and, based on the cooccurrence relationship between the conceptual identifiers, automatically generating characteristic vectors of the conceptual identifiers; a conceptual vector storage section for storing the characteristic vectors of the conceptual identifiers; a document vector generation section for generating a characteristic vector of the document data and a characteristic

**3**

vector of the retrieval sentence from the characteristic vectors of the conceptual identifiers included in the document data and the retrieval sentence; a document vector storage section for storing the characteristic vector of the document and the characteristic vector of the retrieval sentence; a retrieval section operable in any of said plurality of languages for retrieving a sentence similar to the retrieval sentence from the document data by making use of the degree of similarity between the characteristic vector of the document and the characteristic vector of the retrieval sentence; and an output section for outputting a result of the retrieval.

In the document retrieval unit of the claimed invention, a document is learned and then the document is retrieved based on the learning. In the learning of the document, the contents of the document data of an object of learning, stored in the document storage section, are transmitted to the document analysis section, and the analysis of the document is performed by using the word of the characteristic vector generation dictionary. Then, in the conceptual vector generation section, the words of the document data are converted into conceptual identifiers by using the conceptual identifiers of the characteristic vector generation dictionary and, based on the cooccurrence relationship between the conceptual identifiers, the characteristic vectors of the conceptual identifiers representative of the features of the conceptual identifiers are automatically generated. The characteristic vectors of the conceptual identifiers generated in this way are stored in the conceptual vector storage section. In the retrieval of the sentence, a document, which becomes a retrieval key, is input from the retrieval input section. The document is transmitted to the document analysis section, and the analysis of the document is performed by using the word of the characteristic vector generation dictionary. Then, in the document vector generation section, the characteristic vector of the document is generated from the conceptual identifier registered in the conceptual vector storage section. The characteristic vector of the document generated in this way is stored in the document vector storage section. In the retrieval section, a degree of similarity is compared between the characteristic vector of the learned document and the characteristic vector of the document which becomes a retrieval key. A high degree of similarity is transmitted to the output section as a result of the retrieval. The output section outputs the result of the retrieval.

Further objects and advantages of the present invention will be apparent from the following description of the preferred embodiments of the present invention as illustrated in the accompanying drawings.


BRIEF DESCRIPTION OF THE DRAWINGS

FIGS. 1A to 1C are block diagrams showing the basic construction of the present invention as set forth in Claim 1;
FIGS. 2A to 2C are block diagrams showing the basic construction of the present invention as set forth in Claim 2;
FIGS. 3A to 3C are block diagrams showing the basic construction of the present invention as set forth in Claim 3;
FIG. 4 is a diagram used to explain how the characteristic vector of the conceptual identifier of the present invention is generated;
FIG. 5 is a diagram used to explain how the characteristic vector of the conceptual identifier of the present invention is generated;
FIG. 6 is a diagram used to explain the generation of the characteristic vector of a document of the present invention;
FIG. 7 is a diagram used to explain how a document is classified by the present invention;
FIG. 8 is a diagram used to explain an example of the classification of documents performed in accordance with the present invention;
FIG. 9 is a diagram used to explain a plurality of characteristic vector generation dictionaries for each language according to the present invention as set forth in Claim 1;
FIGS. 10A to 10C are block diagrams showing the basic construction of the present invention as set forth in Claim 4;
FIGS. 11A to 11B are diagrams used to explain an ambiguous retrieval example in a document retrieval unit of an embodiment of the present invention as set forth in Claim 4; and
FIGS. 12A to 12C are diagrams used to explain another ambiguous retrieval example in a document retrieval unit of an embodiment of the present invention as set forth in Claim 4.


DESCRIPTION OF THE PREFERRED EMBODIMENTS

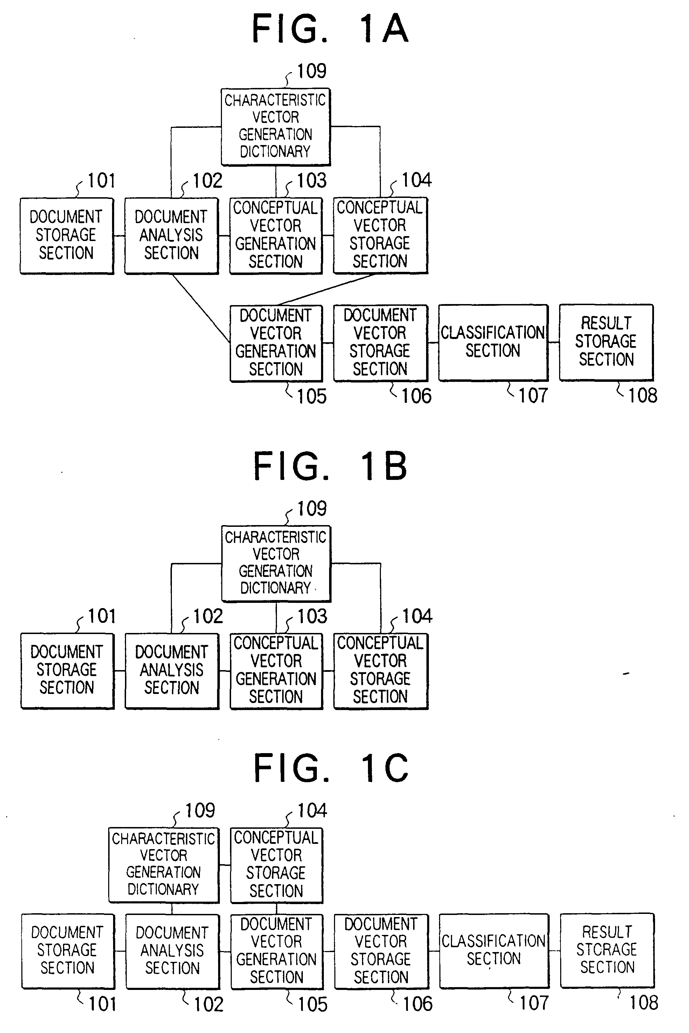

An example of a document classification unit of the present invention as set forth in Claim 1 is shown in FIGS. 1A to 1C. FIG. 1A shows the entire construction of the unit, FIG. 1B the construction of the unit that is used at the time of learning, and FIG. 1C the construction of the unit that is used at the time of classification. In FIGS. 1A to 1C, 101 is a document storage section, 102 a document analysis section, 103 a conceptual vector generation section, 104 a conceptual vector storage section, 105 a document vector generation section, 106 a document vector storage section, 107 a classification section, 108 a result storage section, and 109 a characteristic vector generation dictionary.

The document storage section 101 stores documents for use in learning and documents that are classified.

The document analysis 102 receives a document from the document storage section 101 and performs the morphological analysis of the document by using the word dictionary of the characteristic vector generation dictionary 109. The morphological analysis of the document used herein means dividing a document into words.

The outline of the operation of each constitutional element in a case where a conceptual vector is learned will be described based on FIG. 1B. In the conceptual vector generation section 103, the word data transmitted from the document analysis section 102 is converted into a conceptual identifier by referring to the conceptual dictionary (where a word and a conceptual identifier are correlated with each other) of the characteristic vector generation dictionary 109, and then a characteristic vector of the conceptual identifier is generated by using the cooccurrence between conceptual identifiers. The conceptual vector storage section 104 stores the characteristic vector of the conceptual identifier generated in the conceptual vector generation section 103.

Next, the outline of the operation of each constitutional element in a case where a document is classified will be described based on FIG. 1C. In the document vector generation section 105, the word data transmitted from the document analysis section 102 is converted into a conceptual identifier by referring to the conceptual dictionary of the characteristic vector generation dictionary 109, and then a characteristic vector of the obtained conceptual identifier is obtained by referring to the conceptual vector storage section 104. The characteristic vector of the document is obtained from the characteristic vectors of the conceptual identifiers obtained for all words that are obtained from the document (e.g., by averaging the characteristic vectors). The document vector storage section 106 stores the characteristic vector of the document obtained in the document vector generation section. The classification section 107 classifies the document by using the characteristic vector of the document transmitted from the document vector storage section 106. The result storage section 108 stores the information of the document classified by the classification section 107 (i.e., store what field the document is classified to).

The characteristic vector generation dictionary 109 consists of a word dictionary for analyzing the morpheme of a document and a conceptual dictionary for obtaining a conceptual identifier related to each word. The dictionary 109 does not always need to be divided into two dictionaries, but it may be constituted by a single dictionary where a conceptual identifier is assigned to each word.

Because the number of the conceptual identifiers related to all words used in a normal document will generally become a large numerical value, it is preferable that the number of conceptual identifiers which are used in generating a document characteristic vector be limited. For this reason, the characteristic vector of the conceptual identifier is generated only by using the conceptual identifier registered in the conceptual dictionary of the characteristic vector generation dictionary 109. With this, the huge increase in the size of the storage space of the characteristic vectors can be suppressed.

At the time the characteristic vectors of the conceptual identifiers are learned, a large amount of document data for "learning" are stored in the document storage section 101. The document data, read out of the document storage section 101, are read into the document analysis section 102 at suitable units of, for example, an article, a paragraph, and a single sentence. The document analysis section 102 analyzes the document data to extract words. The conceptual identifiers relating to the extracted words are obtained by referring to the characteristic vector generation dictionary 109. Based on a string of the obtained identifiers, the conceptual vector generation section 103 generates the characteristic vectors of the conceptual identifiers. The characteristic vectors of the conceptual identifiers, generated by the section 103, are stored in the conceptual vector storage section 104. In this way, the characteristic vectors of the identifiers are learned.

When a document is classified, the data of a document to be classified are stored in the document storage section 101. The document data, read out of the document storage section 101, are read into the document analysis section 102 at units that are desired to be classified, for example, at units of an article. The document analysis section 102 analyzes the document data to extract words. The conceptual identifiers relating to the extracted words are obtained by referring to the contents of the conceptual vector storage section 104. A plurality of words are usually extracted from a single unit (single article, for example) of the document data. But, in this case, the characteristic vector of the document is calculated by averaging the values of the characteristic vectors of all the related conceptual identifiers.

At this time, the values of the characteristic vectors are not simply averaged but the characteristic vector of each conceptual identifier is given a weight in proportion to the inverse number of the occurrence frequency of the conceptual identifier. That is, after the weighting operation, the averaging operation is made. (For example, the number of articles where the conceptual identifier occurs is investigated from a large amount of articles, then the characteristic vector of the conceptual identifier is multiplied by log(total number of articles/number of articles where the conceptual identifier occurs), and the averaging operation is performed.) If done like this, there will be some cases where a good value is obtained.

After the characteristic vector of the document has been obtained, the classification of the document can be performed by using a conventional clustering method. In this method, the documents where the distances between documents are close to each other is considered to be in the same field.

In addition, a typical document is selected for each classification group by a human, then a temporarily representative vector of the classification group of the typical document is generated from the characteristic vectors of the conceptual identifiers extracted from the document, and a document can be classified by the temporarily representative vector of a classification group to which the characteristic vector of the document read from the document storage section 101 is close. Even in a classification method such as this, if a large amount of document data are read out of the document storage section 101, the influence of the error resulting from the fact that temporarily representative vectors are selected by a human will be reduced and a large number of general representative vectors can be finally generated for each field.

A method of generating the characteristic vector of the conceptual identifier will hereinafter be described.

Assume that the words of a document where the morpheme thereof is analyzed are p words: $word_1$, $word_2$, $\cdots$, $word_p$, that the conceptual identifiers corresponding to each element of a characteristic vector are n conceptual identifiers: $conc_1$, $conc_2$, ..., $conc_n$, that the conceptual identifiers to which a characteristic vector is given (referred to as a conceptual characteristic-vector generation identifier) are q identifiers: $cid_1$, $cid_2$, ..., $cid_q$, and that the articles prepared for learning the characteristic vector of a conceptual identifier are m articles.

The word used herein is the word of a language which is desired to be handled, such as "Watashi," "I," and "ich", and the conceptual identifier is a number applied to each conception. Some dictionaries have a list where a word and a conceptual identifier correspond to each other. For example, there is an electronic dictionary (EDR) of Japan Electronic Dictionary Institute. Even when an electronic dictionary such as this cannot be used, the classification method of this embodiment can be used by sorting the words registered in a dictionary, for example, in an ascending order, to assign a number to each word and making "a number of the word" = "an conceptual identifier relating to the word." In order to assign a number to each word, the number of the word can be set by what line the word comes at when sorted.

Also, the conceptual identifier can be obtained even by utilizing a Japanese language dictionary, an English-Japanese dictionary, a German-Japanese dictionary, etc. For example, if the number of a conception "Watashi" is expressed by "I", the conceptual identifier relating to the word "Watashi" will become "I". The number of the conception "Watashi" may suitably be set, for example, to the number of the word "Watashi". If an English-Japanese has an item "I: Watashi", the conceptual identifier relating to the word "I" can also be set to "I". Also, if a German-Japanese has an item "ich: Watashi," " the conceptual identifier relating to the word "ich" can be set to "I". In general, because there are some cases where a plurality of conceptions relate to a single word, a plurality of conceptual identifiers may exist.

The occurrence frequency vector $V_i$ of a word contained in an article i is expressed by the following Equation (1):

[Eq. 1]

$$V_i = (v_{i1}, v_{i2}, ..., v_{ip}) \tag{1}$$

$v_{ij}$: number of words, $word_j$, which occur in the article, i.

The occurrence frequency vector $U_i$ of a conceptual characteristic-vector generation identifier contained in an article i is expressed by the following Equation (2):

[Eq. 2]

$$U_i = (u_{i1}, u_{i2}, ..., u_{iq}) \tag{2}$$

$u_{ij}$: number of conceptual characteristic-vector generation identifiers, $cid_j$, which occur in the article, i.

Let a function expressing the strength of the relation between a word, $word_i$, and a conceptual identifier, $conc_j$, be $f(word_i, conc_j)$. There are some cases where the strength of the relation has not been described, depending upon a conceptual dictionary that is used. In such a case, if a word, $word_i$, and a conceptual identifier, $conc_j$, relate to each other, the strength of the relation is defined as $f(word_i, conc_j) = 1$, and if a word, $word_i$, and a conceptual identifier, $conc_j$, do not relate to each other, the strength of the relation is defined as $f(word_i, conc_j) = 0$.

There are some cases where a plurality of conceptual identifiers are related to a single word, and therefore there is a method where all of the conceptual identifiers are used to generate the occurrence frequency vector $U_i$ or a method where one or up to a suitable number of the conceptual identifiers are used to generate the occurrence frequency vector $U_i$. That is, more generally, if r conceptual identifiers of a plurality of conceptual identifiers are used, then all cases can be coped with. For example, if it is desired that all conceptual identifiers are used, the number of conceptual identifiers, r, can be set to r = n. If it is desired that only one conceptual identifier is used, the number of conceptual identifiers, r, can be set to r = 1. Then, when r conceptual identifiers of the conceptual identifiers related to the words that are contained in an article, i, are used, the conceptual-identifier occurrence frequency vector is expressed by $T_i$, which is defined as follows:

[Eq. 3]

$$T_i = (t_{i1}, t_{i2}, \ldots, t_{in}) \ldots (3)$$

$$t_{ij} = \sum_{k=1}^{P} v_{ik} \cdot g(word_k, conc_j)$$

$$g(word_i, conc_j) = f(word_i, conc_j),$$

$$\text{for } h(word_i, conc_j) \in \underset{k=1}{\overset{n,r}{rmax}} h(word_i, conc_k)$$

$$g(word_i, conc_j) = 0,$$

$$\text{for } h(word_i, conc_j) \notin \underset{k=1}{\overset{n,r}{rmax}} h(word_i, conc_k)$$

where the value of $h(word_i, conc_j)$ is set so that the same value does not occur in all $f(word_i, conc_j)(1 \leq j \leq n)$. In a simplest method, $h(word_i, conc_j) = f(word_i, conc_j) + j/L$ (where L is a sufficiently great number).

Also, $rmax_{k=1}^{n,r}$ is an aggregation where each value is arranged in order of a larger value when k moves from 1 to n and where the values up to the high-order r are collected.

The characteristic vector $W_j$ of the conceptual characteristic-vector generation identifier $cid_j$ is expressed by the following equation:

[Eq. 4]

$$W_j = (w_{j1}, w_{j2}, \cdots, w_{jn}) = \sum_{i=1}^{m} u_{ij} \cdot \frac{T_i}{|T_i|} \quad \ldots (4)$$

As evident in Equation (4), the occurrence frequency vectors $T_i$ of the conceptual identifiers of an article are weighted by the frequency of occurrence in the article and are added. Therefore, the characteristic vector $W_j$ of the conceptual characteristic-vector generation identifier $cid_j$ will have a value similar to the conceptual identifier occurrence frequency distribution of the field of an article where the conceptual characteristic-vector generation identifier $cid_j$ are included.

The characteristic vectors, $A_1, A_2, \ldots, A_m$, of an article are calculated from the characteristic vector of the conceptual identifier by the following Equation:

[Eq. 5]

$$A_i = \sum_{j=1}^{q} \log\left(\frac{m}{m_j}\right) \cdot u_{ij} \cdot \frac{W_j}{|W_j|} \qquad \dots (5)$$

where $m_j$ is the number of articles where the conceptual characteristic-vector generation identifier $cid_j$ is included.

Note that the conceptual identifier to which a characteristic vector is given may be exactly the same as or entirely differ from the conceptual identifier corresponding to each element of the characteristic vector. For example, the number of dimensions of a vector is set to 100 or so and the number of conceptual identifiers to which a characteristic vector is given can be set to 1000 or so. In the following description, the aforementioned conceptual identifiers are exactly the same for making it easier to understand. That is, $n = q$, and in all i's ($1 < i \leqq n$), $conc_i = cid_i$.

A method of generating the characteristic vector of the conceptual identifier will hereinafter be described in a concrete form.

A description will be made of how the characteristic of the conceptual identifier is generated from document data such as:

Illustrative sentence A: The American Government has proposed the drastic reconsideration in the regulation of the COCOM to advanced principal countries, and

Illustrative sentence B: The intention seems to sharply reduce the regulated items of the COCOM, on condition that the export of industrial manufactured goods, which leads to the manufacture of weapons of the countries of an object of regulation, is regulated. Although, in this embodiment, document data is read in at units of one sentence, the data may be read in at other units such as an article.

Also, suppose that the number of dimensions of the characteristic vector is 21 dimensions, that is, the number of conceptual identifiers registered in a characteristic vector generation dictionary is 21 conceptual identifiers, and that the elements correspond to conceptual identifiers "American," "government," "advanced," "main," "nation," "COCOM, " "regulation," "drastic," "reconsideration," "proposition," "object," "fighting implement," "make," "industry," "manufactured goods," "export," "condition," "kind of goods," "sharply," "reduction," and "intention." (A "language" represents a conceptual identifier applied to a conception "language." It is some numerical value when it is practically used, but since there is no need to limit the "language" to a numerical value, it is expressed with a high degree of freedom.)

The conceptual identifiers being related to the words "American," "government," "advanced," "principal," "country," "COCOM," "regulation," "drastic," "reconsideration," "proposition," "object," "weapon," "manufacture," "industry," "manufactured goods," "export," "condition," "items," "sharply," "reduction," and "intention" are as follows:

Conceptual identifier "American" in regard to a word "American,"
Conceptual identifier "government" in regard to a word "government,"
Conceptual identifier "advanced" in regard to a word "advanced,"
Conceptual identifier "main" in regard to a word "principal,"
Conceptual identifier "nation" in regard to a word "country,"
Conceptual identifier "COCOM" in regard to a word "COCOM,"
Conceptual identifier "regulation" in regard to a word "regulation,"
Conceptual identifier "drastic" in regard to a word "drastic,"
Conceptual identifier "reconsideration" in regard to a word "reconsideration,"
Conceptual identifier "proposition" in regard to a word "proposition,"
Conceptual identifier "object" in regard to a word "object,"
Conceptual identifier "fighting implement" in regard to a word "weapon,"
Conceptual identifier "make" in regard to a word "manufacture,"
Conceptual identifier "industry" in regard to a word "industry,"
Conceptual identifier "manufactured goods" in regard to a word "manufactured goods,"
Conceptual identifier "export" in regard to a word "export,"
Conceptual identifier "condition" in regard to a word "condition,"
Conceptual identifier "kind of goods" in regard to a word "items,"
Conceptual identifier "sharply" in regard to a word "sharply,"
Conceptual identifier "reduction" in regard to a word "reduction," and
Conceptual identifier "intention" in regard to a word "intention."

If, under these conditions, the illustrative sentence A is read in from the document storage section 101, then it will be analyzed by the document analysis section 102, and words "American," "government," "advanced," "principal," " "country," "COCOM," "regulation," "drastic," "reconsideration," and "proposition" will be extracted. In the conceptual vector generation section 103, the extracted words are converted into conceptual identifiers "American," "government," " "advanced," "main," "nation," "COCOM," "regulation," "drastic," "reconsideration," and "proposition," and the occurrence frequency distribution vector of the conceptual identifiers is obtained.

The obtained occurrence frequency distribution vector of the conceptual identifiers is (1, 1, 1, 1, 1, 1, 1, 1, 1, 1, 0, 0, 0, 0, 0, 0, 0, 0, 0, 0) = $V_A$.

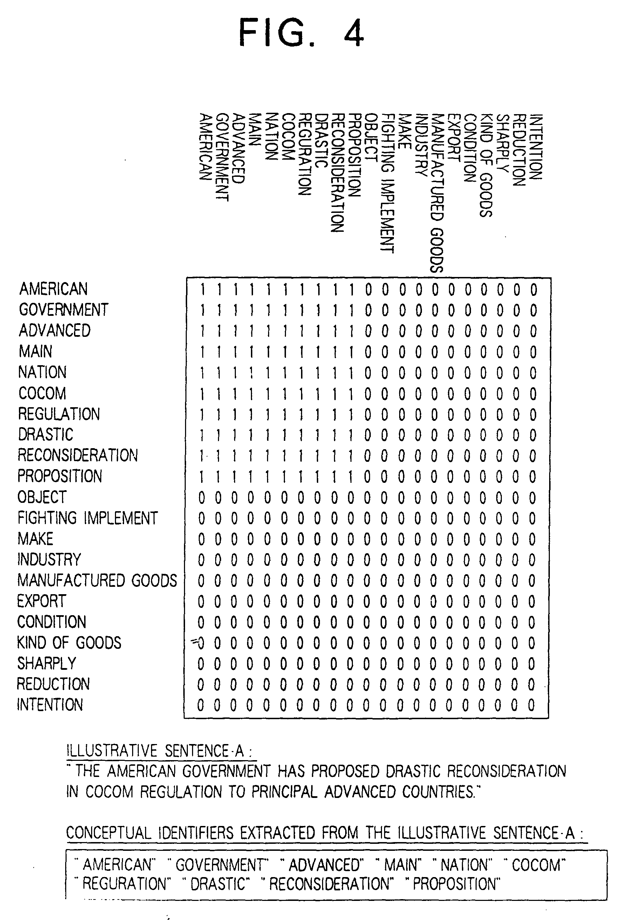

Therefore, (1, 1, 1, 1, 1, 1, 1, 1, 1, 1, 0, 0, 0, 0, 0, 0, 0, 0, 0, 0) = $V_A$ is added to the characteristic vector of the conceptual identifiers which occur in the illustrative sentence A, such as "American" and "government." More accurately, the absolute value of the vector = $V_A$ is normalized to 1 and then is added. FIG. 4 shows the characteristic vector of the conceptual identifiers arranged in the form of a matrix after the illustrative sentence A is read in.

If the illustrative sentence B is next read in from the document storage section 101, then it will be analyzed by the document analysis section 102, and words "regulation," "object," "country," "weapon," "manufacture," "industry," " "manufactured goods," "export," "regulation," "condition," "COCOM," "regulation," "item," "sharply," "reduction," and "intention" will be extracted. In the conceptual vector generation section 103, the extracted words are converted into conceptual identifiers "regulation," "object," "nation," "fighting implement," "make," "industry," "manufactured goods," "export," "regulation," "condition," "COCOM," "regulation," "kind of goods," "sharply," "reduction," and "intention."

The obtained occurrence frequency distribution vector of the conceptual identifiers is (0, 0, 0, 0, 1, 1, 3, 0, 0, 0, 1, 1, 1, 1, 1, 1, 1, 1, 1, 1) = $V_B$.

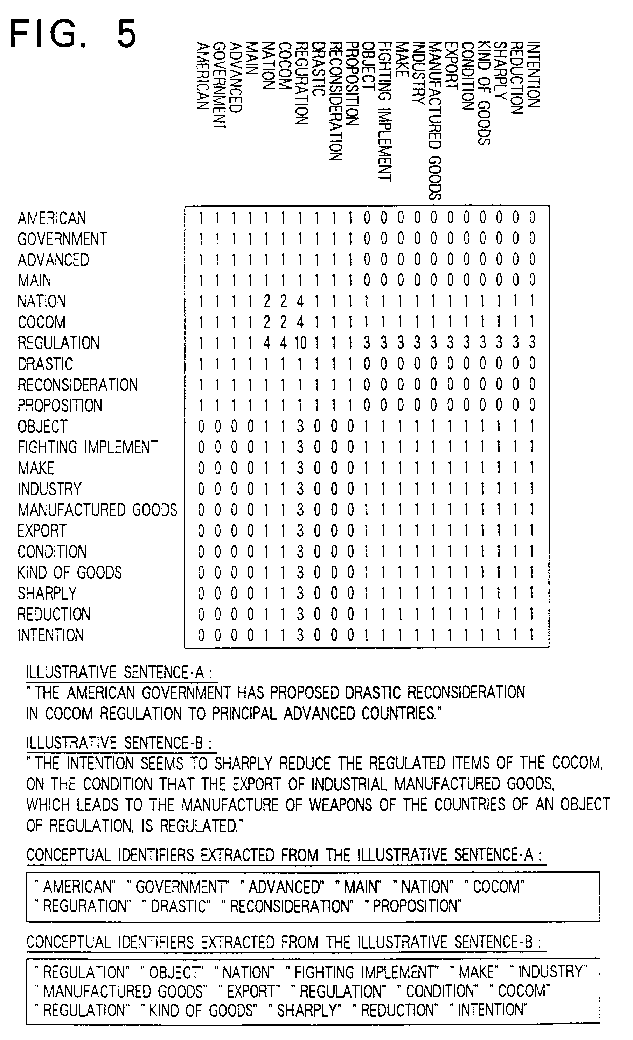

Because "regulation" has occurred three times, a vector (0, 0, 0, 0, 3, 3, 9, 0, 0, 0, 3, 3, 3, 3, 3, 3, 3, 3, 3, 3) which is three times the occurrence frequency distribution vector of the conceptual identifiers = $V_B$ is added to the characteristic vector of "regulation." More accurately, the absolute value of the vector = $V_B$ is normalized to 1, is multiplied by three, and is added. (0, 0, 0, 0, 1, 1, 3, 0, 0, 0, 1, 1, 1, 1, 1, 1, 1, 1, 1, 1) = $V_B$ is added to the characteristic vector of the conceptual identifiers which occur only once in the illustrative sentence B, such as "object" and "nation." More accurately, the absolute value of this vector = $V_B$ is normalized to 1 and then is added. FIG. 5 shows the characteristic vector of the conceptual identifiers arranged in the form of a matrix after the illustrative sentences A and B are read in.

While, in the drawings, a description has been made by adding an integer number at all times for making it easy to understand, as described above, in this method the size of a vector to be added will vary depending upon the length of a sentence. Therefore, in practice, it is preferable that the absolute value of a vector, which is added, be normalized to 1 or the absolute value of the vector of an occurrence frequency distribution be normalized to 1, then a value proportional to the frequency of occurrence be multiplied, and finally addition be performed. This method has been described as "More accurately" in the foregoing description.

The absolute value of the finally obtained characteristic vector is normalized to 1.

The characteristic vector of the conceptual identifier obtained in the aforementioned way is stored in the conceptual vector storage section 104 and is used when a document is classified. As a concrete example, a description will be made of the process in a case where the following illustrative sentence C is read in.

Illustrative sentence C: The American government has proposed the reduction of weapons.

If the illustrative sentence C is read in from the document storage section 101, then it will be analyzed by the document analysis section 102, and words "American," "government," "weapon," "reduction," and "proposition" will be extracted. The extracted words are converted into conceptual identifiers "American," "government," "fighting implement," "reduction," and "proposition" by the document vector generation section 105.

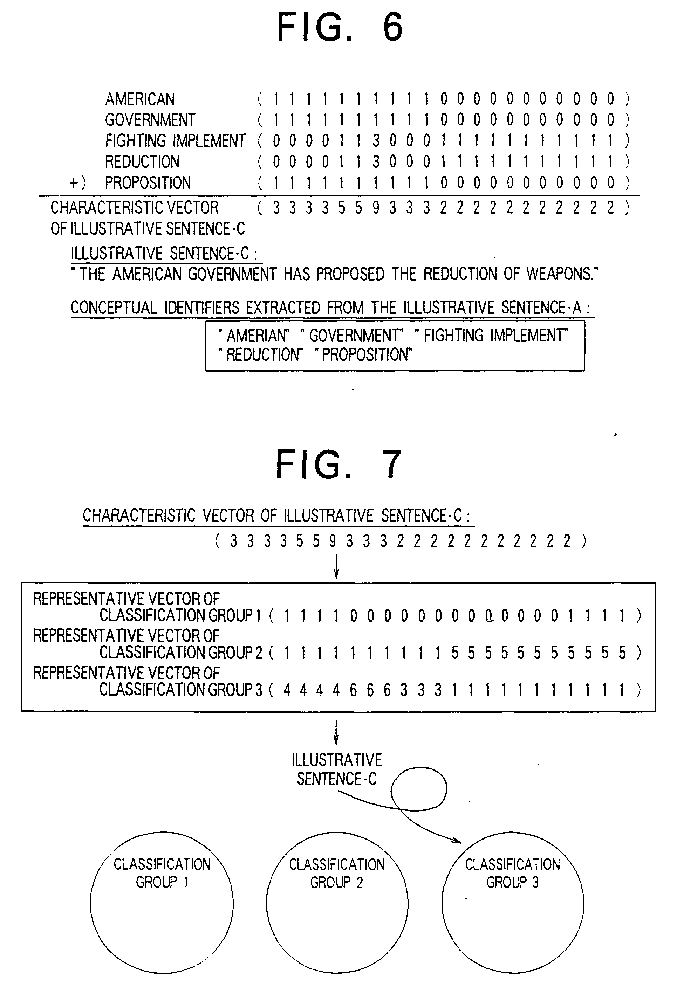

Then, in the document vector generation section 105, the characteristic vector of the conceptual identifiers which occur in the illustrative sentence C, such as "American" and "government," is added in sequence by referring to the contents of the conceptual vector storage section 104. As the characteristic vector of the illustrative sentence C, (3, 3, 3, 3, 5, 5, 9, 3, 3, 3, 2, 2, 2, 2, 2, 2, 2, 2, 2, 2) is obtained. FIG. 6 shows the characteristic vector of the illustrative sentence generated by using the characteristic vector of the conceptual identifiers shown in FIG. 5. While, in FIG. 6, the normalization of the vector has not been performed for making it easy to understand, in an actual process the absolute value of the characteristic vector of each conceptual identifier is normalized to 1 before addition, and the absolute value of the finally obtained characteristic vector is also normalized to 1.

Next, a description will be made of how the characteristic vector of a document is used at the time of classification. In the simplest method, the absolute value of the obtained characteristic vector of the document is first normalized to 1, and then classification can be performed by a conventional K-means method, or classification can be performed by the degree of similarity with the (temporarily) representative vector of a classification group. The degree of similarity is obtainable by obtaining distance or internal product.

As a concrete example of classification, it is assumed that there are three classification groups and that the representative vectors of the classification groups are obtained as follows:

[Eq. 6]

Representative vector of classification group 1:

(1,1,1,1,0,0,0,0,0,0,0,0,0,0,0,0,0,1,1,1,1),

Representative vector of classification group 2:

(1,1,1,1,1,1,1,1,1,1,5,5,5,5,5,5,5,5,5,5), and

Representative vector of classification group 3:

(4,4,4,4,6,6,6,3,3,3,1,1,1,1,1,1,1,1,1,1).

As a scale of a degree of similarity, the absolute values of both the characteristic vector of a document and the representative vector of a classification group are normalized to 1 and then the internal product of both is calculated, and it is assumed that the greatest value indicates the highest degree of similarity. Therefore,

[Eq. 7]

Characteristic vector of the illustrative sentence C:

$$\frac{1}{\sqrt{238}}(3,3,3,3,5,5,9,3,3,3,2,2,2,2,2,2,2,2,2,2)$$

Representative vector of classification group 1:

$$\frac{1}{\sqrt{8}}(1,1,1,1,0,0,0,0,0,0,0,0,0,0,0,0,0,1,1,1,1),$$

Representative vector of classification group 2:

$$\frac{1}{\sqrt{285}}(1,1,1,1,1,1,1,1,1,1,5,5,5,5,5,5,5,5,5,5),$$

Representative vector of classification group 3:

$$\frac{1}{\sqrt{210}}(4,4,4,4,6,6,6,3,3,3,1,1,1,1,1,1,1,1,1,1).$$

The internal product of the characteristic vector of the illustrative sentence C and the representative vector of each classification group are given as follows:

[Eq.8]

Internal product with classification group 1:

$$\frac{1}{\sqrt{238}} \cdot \frac{1}{\sqrt{8}} \cdot 20 \simeq 0.4583$$

Internal product with classification group 2:

$$\frac{1}{\sqrt{238}} \cdot \frac{1}{\sqrt{285}} \cdot 150 \simeq 0.5759$$

Internal product with classification group 3:

$$\frac{1}{\sqrt{238}} \cdot \frac{1}{\sqrt{210}} \cdot 211 \simeq 0.9438$$

Because it is found that the characteristic vector of the illustrative sentence C is closest to the representative vector of the classification group 3, the illustrative sentence C is classified into the classification group 3. This result is shown in FIG. 7. While, in FIG. 7, as with FIG. 6, the normalization of the vector has not been performed for making it easy to understand, in an actual process the absolute value of the characteristic vector of each conceptual identifier is first normalized to 1 and then the comparison is performed.

The experiment for evaluating the effectiveness of this classification unit was made.

As an experimental method, specifically, in the task where 400 articles of the Asahi newspaper, 1987, is classified into five fields: "government," "economy," "international intercourse," "society (crime, event)," and "society (education, human)," the classification that a human made is considered to be a correct solution and the classification accuracy was obtained. Note that, in a case where an article that can be classified into two fields, both fields are considered to be a correct solution.

When the characteristic vector is constructed in performing this task, the two following classification methods were used to compare the classification accuracy.

1. Use words as they are.
2. Use conceptual identifiers obtained by using an electronic dictionary (EDR).

The data used in the experiment and the object of the use are as follows:

1. EDR evaluation version 2.1

The Japanese word dictionary version 2.1 of the EDR was used in the extraction of word data, and the Japanese word dictionary and the conceptual dictionary version 2.1 of the EDR were used in the calculation of the degree of similarity between words.

The number of the registered words of the Japanese word dictionary of the EDR evaluation version 2.1 is about 160,000 basic terms and about 42000 technical terms, and the number of the registered conceptions of the conceptual dictionary version 2.1 of the EDR is about 360,000 conceptions.

2. CD-HIASK (CD-ROM of Asahi newspaper), 1990 (about 150 M bytes, 101966 articles)

The CD-HIASK was used as data for generating a characteristic vector. Also, typical articles in each field were extracted from the CD-HIASK and were used when the representative vector of each field is generated.

3. Article extracted from CD-HIASK (CD-ROM of Asahi newspaper), 1987

This article was used in the comparison between the classification by a human and the classification by the classification unit. An example of this article is shown as follows:

The stable maintenance of prices and exchange is the most important problem: Sumida, the Governor of the Bank of Japan, speeches. Sumida, the Governor of the Bank of Japan, clarified his attitude that wrestles with enlargement of domestic demand and correction of foreign unbalance, while emphasizing that the stable maintenance of prices is the most important problem, as to a financial policy of new year, at the interview with Asahi newspaper, on 31st. On the other hand, based on the fact that the influence of Japanese economy is being increasing internationally, while it is being pointed out that international cooperation is increasingly becoming important, it is further ⋯ that the financial policy ensures its independence from external force and domestic politics, ⋯.

4. Word data

All words were used, excluding "three or less words consisting only of a argon" and "one character words other than a kanji" from the Japanese word dictionary of the EDR evaluation 2.1. A method of extracting a word from a document is a pattern matching method (maximum length matching method) of giving priority to a longer word and selecting it. But, in a case where two continuous words can be extracted by a plurality of combinations, a method (two-clause maximum length matching method) of selecting the first word of a combination where the length of the sum of the two words becomes maximum was used. In the case of a word consisting of a single kanji, only a single kanji, where the words before and after the single kanji are non-kanji, was extracted in order to minimize a mistaken extraction. From the results of the investigation of 500 words extracted from Asahi newspaper, 1990 January 1, it has been found that words are extracted with an accuracy of about 95% by this method.

5. Conceptual identifier data

For all words, excluding "three or less words consisting only of a hiragana" and "one character words other than a kanji" from the Japanese word dictionary of the EDR evaluation 2.1, relevant conceptual identifiers were investigated and the identifiers where the frequency of use is high were adopted. The experiment was made for two cases, a case where all of the relevant conceptual identifiers are used and a case where only one of the relevant conceptual identifiers is used.

6. Characteristic vector

For the conceptual identifier (or word) corresponding to each element of a characteristic vector and the conceptual identifier (or word) to which a characteristic vector corresponds, the same conceptual identifier was used.
Also, the dimensions of the characteristic vector are 4096, 2048, 1024, 512, 256, 128, and 64, and the experiment was made with the use of these 7 kinds of dimensions.
For a method of selecting conceptual identifiers (or words) corresponding to the number of the dimensions of the characteristic vector, conceptual identifiers where the frequency of occurrence is higher among Asahi newspapers, 1990, are simply selected in order.
The results of the experiment obtained in this way will hereinafter be described.
When classification is performed, the field can be judged to be indistinct or distinct by the size of a ratio of the score between the first candidate and second candidate of the field (value of the internal product of the characteristic vector of an article and the representative vector of the field). Therefore, the field where the score ratio is great (field is distinct) is classified into an article group whose classification is easy, while the field where the score ratio is small (field is indistinct) is classified into an article group whose classification is difficult. The classification accuracy was obtained for three values: an easy article group (200 articles), a difficult article group (200 articles), and the whole (400 articles). This result is shown in Table 1.

[Table 1]

| Classification Accuracy [%] | | | | | | | | |
|---|---|---|---|---|---|---|---|---|
| Number of dimensions | | 4096 | 2048 | 1024 | 512 | 256 | 128 | 64 |
| Use easy words difficult as they are whole | Easy | 98.0 | 98.0 | 96.0 | 96.5 | 92.0 | 84.0 | 80.5 |
| | Difficult | 67.5 | 69.0 | 66.0 | 57.5 | 57.5 | 48.5 | 44.0 |
| | All | 82.75 | 83.5 | 81.0 | 77.0 | 74.75 | 65.75 | 62.25 |
| Use all of easy conceptual difficult identifiers whole | Easy | 98.5 | 98.5 | 97.0 | 94.0 | 89.0 | 82.0 | 76.5 |
| | Difficult | 67.5 | 67.5 | 62.5 | 57.0 | 42.5 | 43.0 | 43.0 |
| | All | 83.0 | 83.0 | 79.75 | 75.5 | 65.75 | 62.5 | 59.75 |
| Use only easy one of difficult conceptual whole identifiers | Easy | 98.5 | 99.0 | 97.0 | 95.5 | 88.5 | 84.0 | 82.5 |
| | Difficult | 70.5 | 70.0 | 66.5 | 63.5 | 43.5 | 43.0 | 47.5 |
| | All | 84.5 | 84.5 | 81.75 | 79.5 | 66.0 | 63.5 | 65.0 |

When the number of dimensions of a vector is more than 512, it can be confirmed, from Table 1, that classification can be made with a comparatively high degree of accuracy if only one conceptual identifier is used. It is found that the classification accuracy of an easy article particularly in the number of dimension 2048 reaches 99% and therefore classification can be made with an accuracy of nearly 100%. This is the experimental result in the case where the EDR evaluation version 2.1 is used as it is, but if other dictionaries are used, it will be predicted that the number of dimensions of an optimum vector will vary depending upon the particle size of the word or conceptual identifier of the dictionary.
In other words, in a case where the number of dimensions of a vector can be set high, it is predicted that high accuracy is obtained, if a dictionary whose particle size is fine is used. In a case where the number of dimensions of a vector cannot be set high, it is predicted that high accuracy is obtained, if a dictionary whose particle size is rough is used. Therefore, it is preferable to use a dictionary whose particle size corresponds to the storage capacity that a classification unit can use.

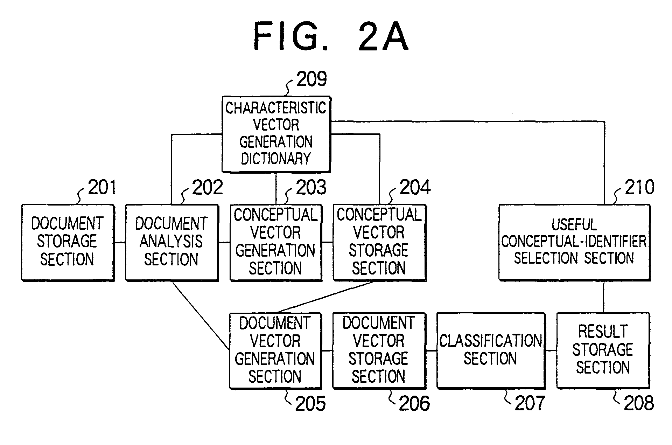

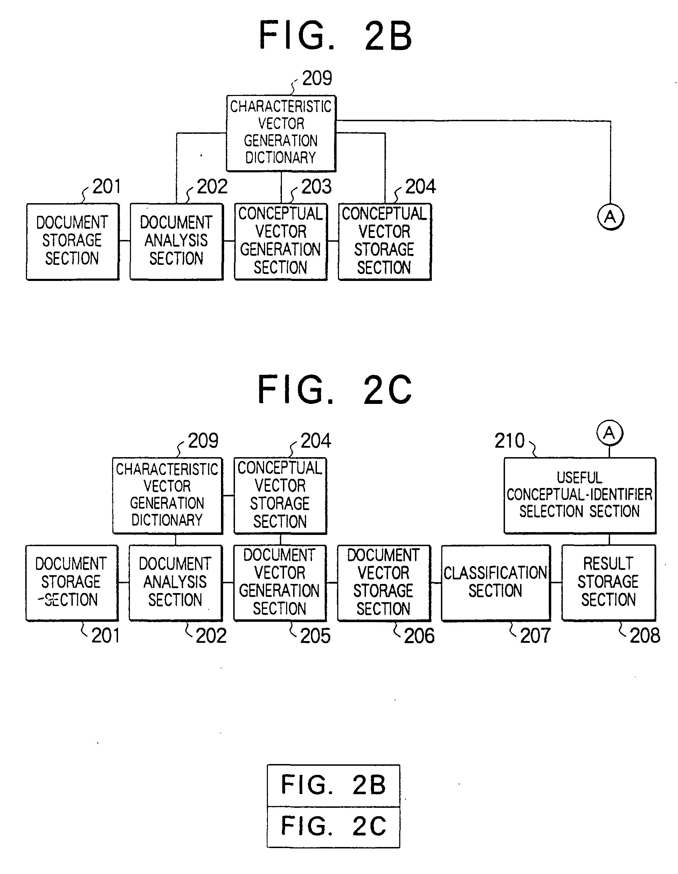

An example of a document classification unit of the present invention as set forth in Claim 2 is shown in FIGS. 2A to 2C. FIG. 2A shows the entire construction of the unit, FIG. 2B the construction of the unit that is used at the time of learning, and FIG. 2C the construction of the unit that is used at the time of classification. In FIGS. 2A to 2C, 201 is a document storage section, 202 a document analysis section, 203 a conceptual vector generation section, 204 a conceptual vector storage section, 205 a document vector generation section, 206 a document vector storage section, 207 a classification section, 208 a result storage section, 209 a characteristic vector generation dictionary, and 210 a useful conceptual-identifier selection section.

By the same method as the embodiment shown in FIGS. 1A to 1C, the characteristic vector of the conceptual identifier is learned and, based on this, a large amount of document data are classified. The result of the classification is stored in the storage section 208. Based on this result, the useful conceptual-identifier selection section 210 selects a useful conceptual-identifier. Specifically, the frequency of occurrence of each conceptual identifier is obtained for each classification, and a conceptual identifier which is contained in any classification group at the same rate is removed (method 1: remove a conceptual identifier where a ratio of the maximum frequency and the minimum frequency is less than a certain threshold value), or a conceptual identifier which is contained only in a certain classification group at a high rate is selected (method 2: select a conceptual identifier where a ratio of the maximum frequency and the second highest frequency is greater than a certain threshold value). The conceptual identifier, selected by the useful conceptual-identifier selection section 210, does not always need to be selected from the conceptual identifiers registered in the characteristic vector generation section 209, but it can be selected from a wider range of conceptual identifiers.

Assume there are three classification groups: a classification group-a, a classification group-b, and a classification group-c, as a concrete example. Also assume that the conceptual identifiers registered in the characteristic vector generation dictionary 209 are only three: "politics," "Japan," and "international intercourse." Further assume the frequency of each conceptual identifier of each group is as follows (the frequencies of "election" and "problem" are also investigated in addition to the conceptual identifiers registered in the characteristic vector generation dictionary 209):

Classification group-a: politics 30%, Japan 5%, international intercourse 35%, election 10%, problem 20%,
Classification group-b: politics 3%, Japan 55%, international intercourse 35%, election 2%, problem 5%, and
Classification group-c: politics 3%, Japan 30%, international intercourse 35%, election 2%, problem 30%.

If the aforementioned method 1 is used in this case, the "international intercourse" are included in any group at the same rate and therefore it will be removed from the characteristic vector generation dictionary. Because the frequencies of the "politics," "Japan," "election," and "problem" differ between the classification groups, they are selected as useful conceptual-identifiers and are registered in the characteristic vector generation dictionary 209 (in a case where the number of the registered conceptual identifiers is desired to be suppressed, a desired number of conceptual identifiers can be selected from the conceptual identifiers different in frequency in order of the frequency of occurrence). When the aforementioned method 2 is used, only "politics" and "election" are selected and registered in the characteristic vector generation dictionary 209, while "Japan," "international intercourse," and "problem" are not registered in the characteristic vector generation dictionary 209. It is also conceivable, as an intermediate method between the method 1 and the method 2, to select a useful conceptual-identifier by whether a ratio between the first frequency and the n th frequency (where n is 3 or more and is less than the number of classification groups by 1) is greater than a certain threshold value.

In addition to the method using a ratio between frequencies, there is a method of selecting a useful conceptual identifier where the value of the dispersion of the frequency is greater.

The conceptual identifier selected in the aforementioned way is considered to have a degree of importance corresponding to a ratio between frequencies (or a dispersion in frequencies). Therefore, when the characteristic vector of the document is calculated, the characteristic vector of a conceptual identifier of a document is first weighted in correspondence with this ratio (or dispersion). (For example, the characteristic vector of the conceptual identifier is multiplied by log(ratio of frequencies).) Then, an averaging operation is performed. With this, there are some cases where a good value of the characteristic vector of a document is obtained.

In this way, only conceptual identifiers useful for classification are registered in the characteristic vector generation dictionary 209. The characteristic vector of a conceptual identifier is learned once more, and based on this, the document is classified. With this, the size of the characteristic vector generation dictionary can be reduced and classification accuracy can be enhanced.

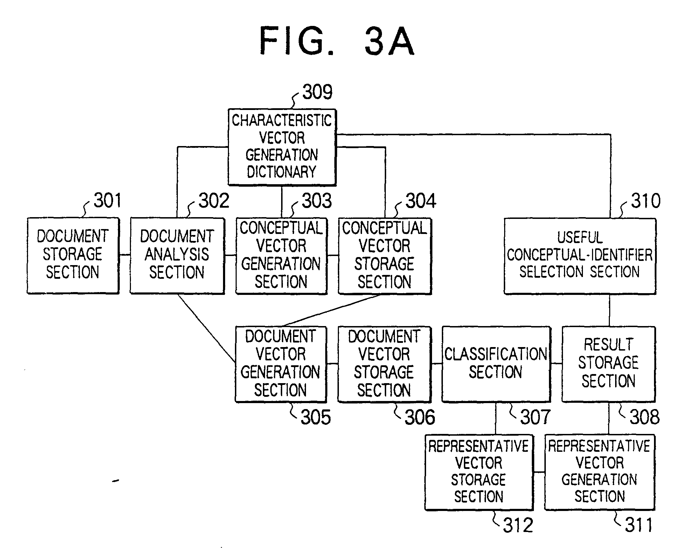

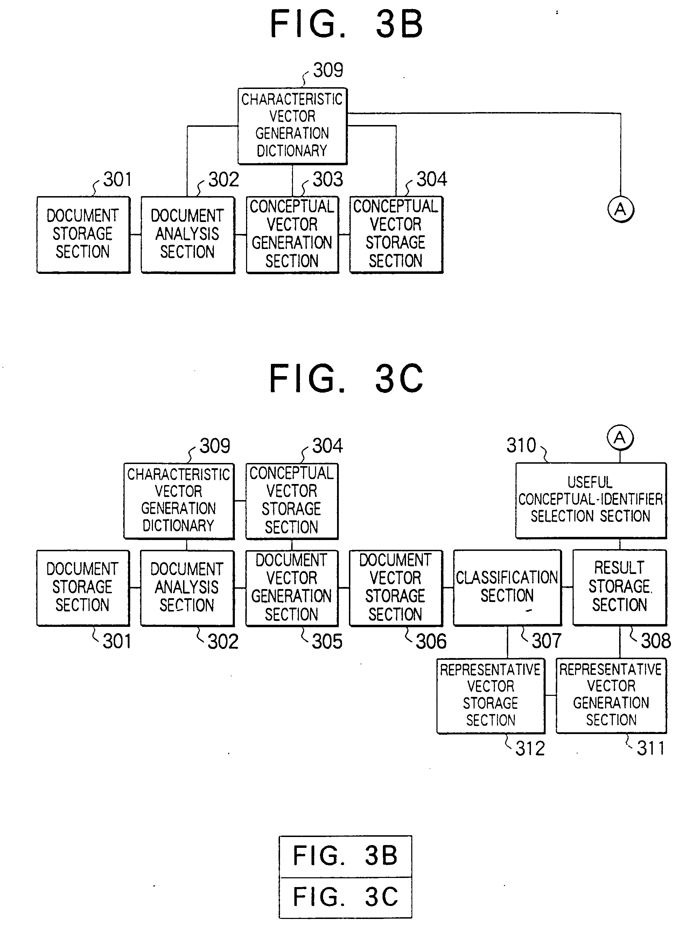

An example of a document classification unit of the present invention as set forth in Claim 3 is shown in FIGS. 3A to 3C. FIG. 3A shows the entire construction of the unit, FIG. 3B the construction of the unit that is used at the time of learning, and FIG. 3C the construction of the unit that is used at the time of classification. In FIG. 3, 301 is a document storage section, 302 a document analysis section, 303 a conceptual vector generation section, 304 a conceptual vector storage section, 305 a document vector generation section, 306 a document vector storage section, 307 a classification section, 308 a result storage section, 309 a characteristic vector generation dictionary, 310 a useful conceptual-identifier selection section, 311 a representative vector generation section, and 312 a representative vector storage section. In a case where the unit of this embodiment is constructed based on the embodiment shown in FIG. 1, this embodiment becomes a system where the useful conceptual-identifier selection section 310 is not included.

By the same method as the embodiments shown in FIGs. 1 and 2, the characteristic vector of the conceptual identifier is learned and, based on this, a large amount of document data are classified. The result of the classification is stored in the storage section 308. Based on this result, the representative vector selection section 311 selects a representative vector. Specifically, the frequency of occurrence of each conceptual identifier is obtained for each classification, then the frequency of the characteristic vector of each conceptual identifier is weighted, and the characteristic vectors are averaged.

Assume there are three classification groups: a classification group-a, a classification group-b, and a classification group-c, as a concrete example. Also assume that the conceptual identifiers registered in the characteristic vector generation dictionary 309 are only three: "politics," "Japan," and "international intercourse." Further assume the frequency of each conceptual identifier of each group is as follows:

Classification group-a: politics 40%, national assembly 50%, international intercourse 10%,
Classification group-b: politics 10%, national assembly 10%, international intercourse 80%, and
Classification group-c: politics 20%, national assembly 10%, international intercourse 70%.

From these assumptions, the representative vector of the classification group-a is given as the sum of the characteristic vector of "politics" multiplied by 0.4, the characteristic vector of "national assembly" multiplied by 0.5, and the characteristic vector of "international intercourse" multiplied by 0.1.

In addition, an averaged characteristic vector of all characteristic vectors of a document classified into the classification group-a may be used as a representative vector of the classification group-a.

If the representative vector is generated in this way, then it will be stored in the representative vector storage 312. By referring to this representative vector when a document is classified, the document read into the document storage section 301 can be classified into a classification group to which a representative vector, most similar to the characteristic vector of that document, corresponds. With this, the classification process can be performed at a high speed.

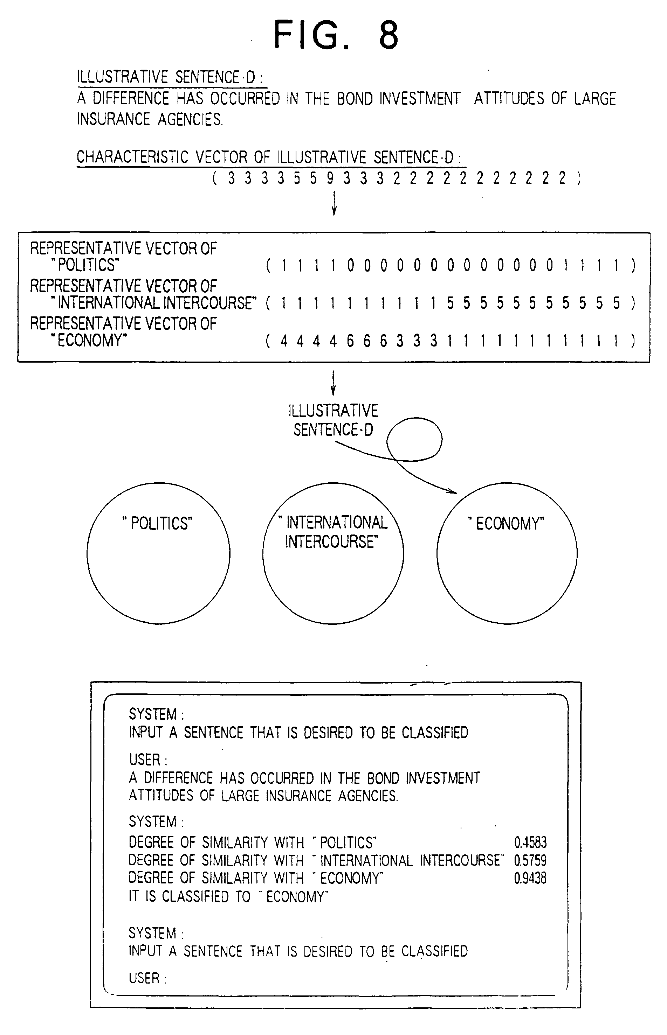

An example of the manner in which a document is classified by this embodiment is shown in FIG. 8. This is an example of the case where, with respect to a question "Input a document that is desired to be classified" on the classification unit side, the user input a sentence "A difference has occurred in the bond investment attitudes of large insurance agencies." The degree of similarity between the characteristic vector of the user's input sentence and the representative vector of the classification group "politics" is about 0.4583. The degree of similarity between the characteristic vector of the user's input sentence and the representative vector of the classification group "international intercourse" is about 0.5759. The degree of similarity between the characteristic vector of the user's input sentence and the representative vector of the classification group "economy" is about 0.9438. This user's input sentence has been classified into the classification group "economy" where the degree of similarity is highest.

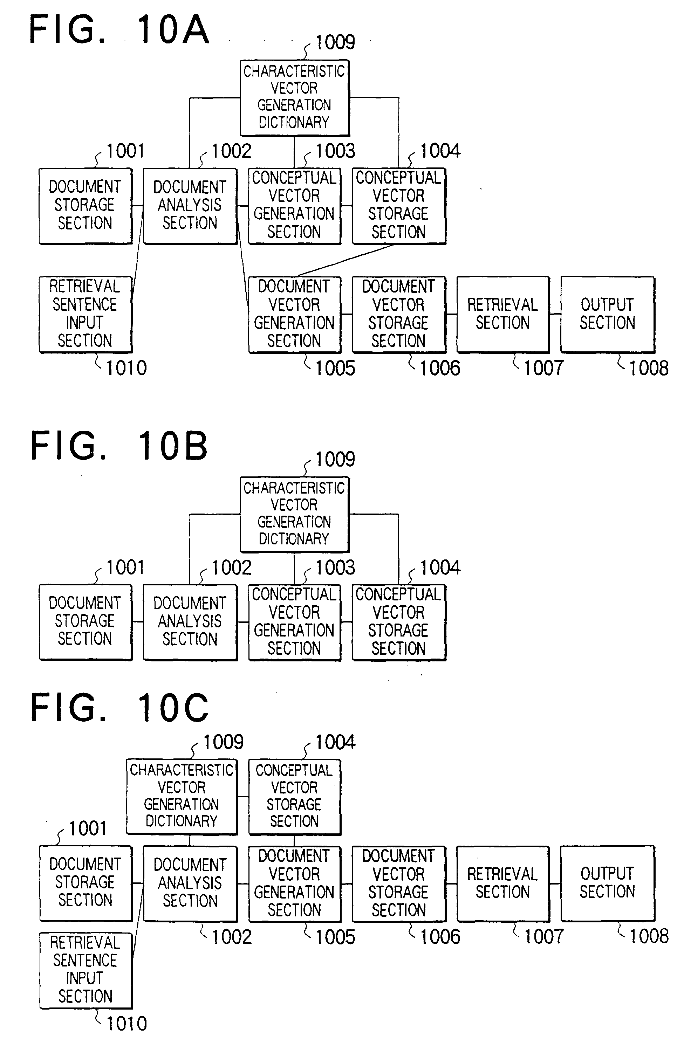

An example of a document retrieval unit as set forth in Claim 5 is shown in FIGS. 10A to 10C. FIG. 10A shows the entire construction of the unit, FIG. 10B the construction of the unit that is used at the time of learning, and FIG. 10C the construction of the unit that is used at the time of classification. In FIGS. 10A to 10C, 1001 is a document storage section, 1002 a document analysis section, 1003 a conceptual vector generation section, 1004 a conceptual vector storage section, 1005 a document vector generation section, 1006 a document vector storage section, 1007 a retrieval section, 1008 an output section, 1009 a characteristic vector generation dictionary, and 1010 a retrieval sentence input section.

A document used for learning or a document of an object of retrieval is stored in the document storage section 1001. A sentence, which is desired to retrieved, is input to the retrieval sentence input section 1010 (even only a word is possible). The document from the document storage section 1001 or the retrieval sentence input section 1010 is input to the document analysis section 1002. The document analysis section 1002 performs the morphological analysis of the input document by using the word dictionary provided in the characteristic vector generation dictionary 1009 (document is divided into words, etc.).

Based on FIG. 10B, a description will be roughly made of how each section is operated when learning a conceptual vector. The conceptual vector generation section 1003 converts the word data transmitted from the document analysis section 1002 into a conceptual identifier by referring to the conceptual dictionary (where a word and a conceptual identifier correspond to each other) provided in the characteristic vector generation dictionary 1009. Then, the characteristic vector of the conceptual identifier is generated by making use of the cooccurrence relationship between conceptual identifiers. The conceptual vector storage section 1004 stores the characteristic vector of the conceptual identifier generated in the conceptual vector generation section 1003.

Based on FIG. 10C, a description will be roughly made of how each section is operated when retrieving a document. In the document vector generation section 1005, the word data transmitted from the document analysis section 1002 is converted into a conceptual identifier by referring to the conceptual dictionary of the characteristic vector generation dictionary 1009, and then a characteristic vector of the obtained conceptual identifier is obtained by referring to the conceptual vector storage section 1004. The characteristic vector of the document is obtained from the characteristic vectors of the conceptual identifiers obtained in this way for all words that are obtained from the document, by averaging the characteristic vectors. The document vector storage section 1006 stores the characteristic vector of the document obtained in the document vector generation section. For the retrieval sentence input from the retrieval sentence input section 1010, the characteristic vector of the retrieval sentence is obtained in the same way and is stored in the document vector storage section 1006. The retrieval section 1007 acquires the characteristic vector of the retrieval sentence from the document vector storage section 1006, and the degree of similarity the characteristic vector of each document and the characteristic vector of the retrieval sentence, which is higher, is output to the output section 1008 as a retrieval result. The output section 1008 outputs the retrieval result transmitted from the retrieval section 1007.

The judgment of the height of the degree of similarity in the retrieval section 1007 is performed by the internal product of the absolute value of the characteristic vector of the retrieval sentence normalized to 1 and the absolute value of the characteristic vector of each document normalized to 1. There is a method where the internal product greater than a certain value (0.9, for example) is transmitted to the output section 1008 as a retrieval result, or a method where a suitable number of documents (10 documents, for example) are selected in order of a higher internal product and are transmitted to the output section 1008.

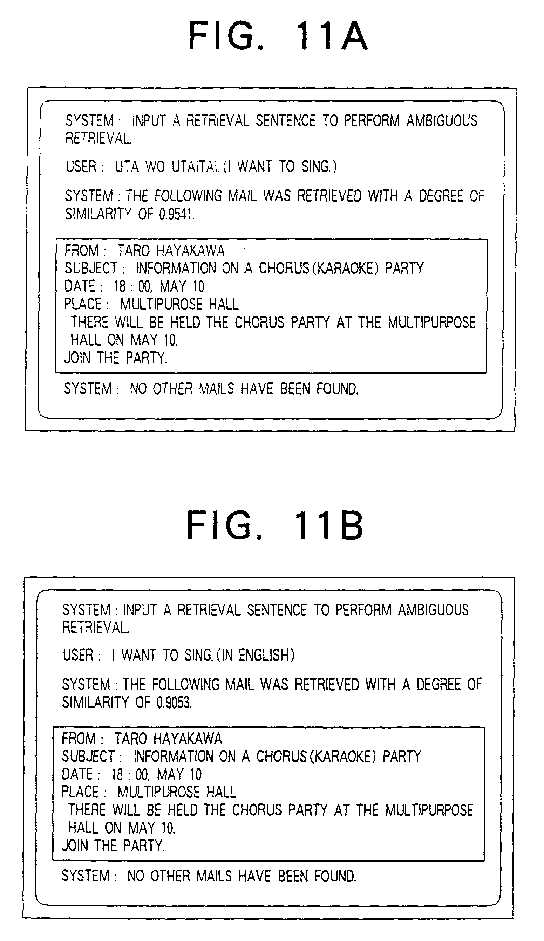

An example of an ambiguous retrieval in this embodiment is shown in FIGS. 11A to 11B. FIG. 11A shows an example of an ambiguous retrieval which is performed by Japanese, while FIG. 11B shows an example of an ambiguous retrieval which is performed by English. In this example, mails relating to "karaoke", for example, a retrieval sentence "Uta wo utaitai" and a retrieval sentence "I want to sing" are retrieved from a large amount of electronic mails.

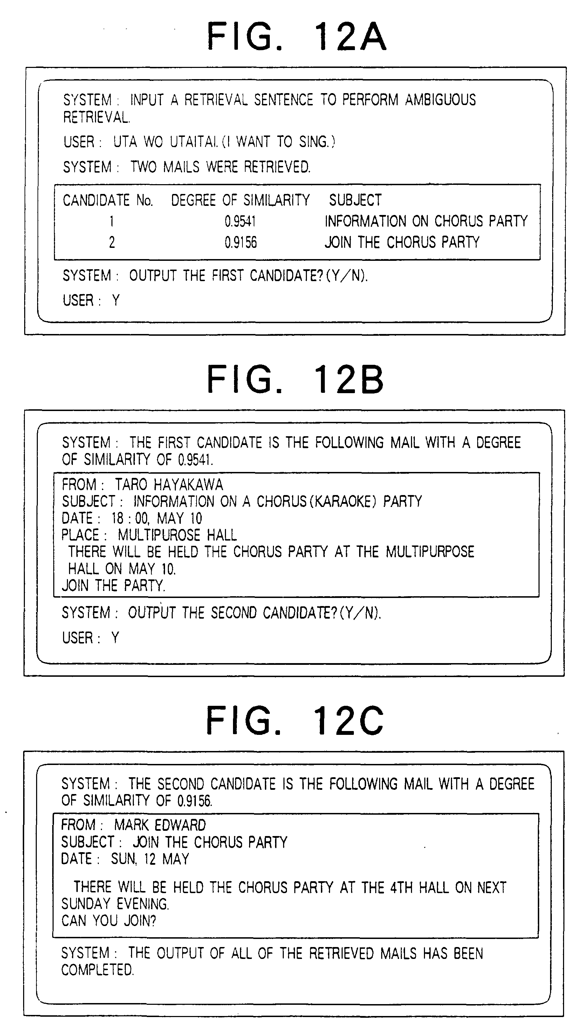

Likewise, another example of the ambiguous retrieval in this embodiment is shown in FIG. 12. In this example, if a retrieval sentence "Uta wo utaitai" is input (FIG. 12A), a Japanese mail ("karaoke", FIG. 12B) and an English mail (chorus party, FIG. 12C) will be retrieved.

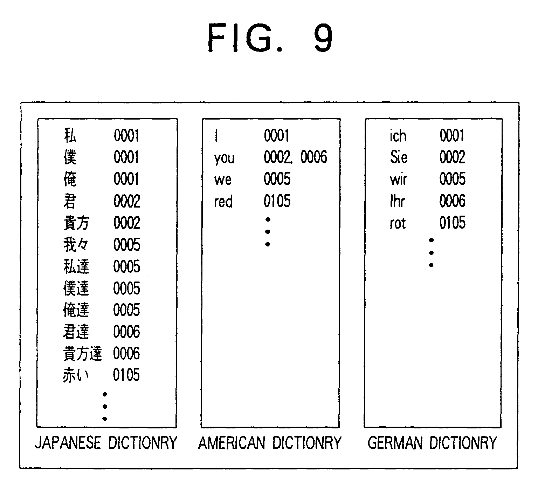

The "characteristic vector generation dictionary for each language", which is used in the document classification unit of the present invention as set forth in Claim 4 and the document classification unit of the present invention as set forth in Claim 6, is provided with a word dictionary for each language and a conceptual dictionary which represents the relationship between a conceptual identifier commonly used in each language and a word of each language, by the number of kinds of languages that are desired to be used. FIG. 9 shows a conceptual diagram of a characteristic vector generation dictionary corresponding to a plurality of languages. In FIG. 9 there is shown a characteristic vector generation dictionary corresponding to three languages: Japanese, English, and German. For example, a word "Watashi" of Japanese, a word "I" of English, and a word "ich" of German are all related to a conceptual identifier "0001". The same may be said of other words. In FIG. 9, "0001" is a conceptual identifier applied to a conception "I", "0002" is a conceptual identifier applied to a conception "you", "0005" is a conceptual identifier applied to a conception "we", "0006" is a conceptual identifier applied to a conception "you (plural)", and "0105" is a conceptual identifier applied to a conception "red". The numerical value itself of the conceptual identifier can use any numerical number, as long as the same number is applied to the same conception and a different number is applied to a different conception. Therefore, in this embodiment of the present invention, the conceptual identifier is expressed in the form of "Watashi" instead of a direct numerical value "0001". With this characteristic vector generation dictionary, even if any language were used, classification or retrieval could be performed with a common conceptual identifier by switching the dictionary in correspondence with the kind of the language of an input document or a retrieval sentence.

The document classification unit and the document retrieval unit of the present invention are not limited only to the classification of normal documents and the retrieval of normal documents. That is, the present invention can be utilized in the automatic classification of electronic mails or electronic news, the selection of electronic mails or news interesting to users (which can be judged by the degree of similarity with the mails or news that users has ever read) or the selection of homonyms in a kana-kanji conversion (homonyms are selected by the degree of similarity with the characteristic vector obtained from the contents that have so far been converted). The present invention can also be utilized in selecting a conversion result most suitable to the past context in the speech recognition and the hand-writing character recognition (recognition result is selected by the degree of similarity with the characteristic vector obtained from the contents that have so far been recognized) and in narrowing the retrieval space between words at the time of recognition (only a word is retrieved which has been related to a conceptual identifier close to the average value of the characteristic vectors obtained from the contents that have so far been recognized). In this case, the aforementioned data are input to the document storage section or the retrieval input section instead of normal document data. In addition, if there is information representative of the relationship between a word and a conceptual identifier for a plurality of languages, classification and retrieval can be made independent of the kind of language.

In accordance with the document classification unit of the claimed invention, the learning of the document and the classification of the document based on the learning are performed by using the characteristic vector of the conceptual identifier and the characteristic vector of the document generated from the characteristic vector of the conceptual identifier. Therefore, if only document data are prepared, the characteristic vector of the conceptual identifier can be generated and automatic document classification can be realized without any human intervention. In addition, since the characteristic vector is generated by using the conceptual identifier, classification accuracy can be enhanced as compared with a case where a word is simply used.

In accordance with the document classification unit of a mode of the claimed invention, the storage space of the characteristic vectors can be reduced and classification accuracy is enhanced, by using the conceptual identifier useful for classification.

In accordance with the document classification unit of another mode of the claimed invention, the unit is constructed so that it further includes: a representative vector generation section for obtaining a characteristic vector of a representative document of each classification stored in the result storage section by using either the characteristic vector of the conceptual identifier or the characteristic vector of the document; and a representative vector storage section for storing the characteristic vector of the representative document. Therefore, if the representative vector of each classification group is generated once, the classification group that a document belongs to can be judged merely by comparing the characteristic vector of the document with the representative vector of each classification group when the document is classified. Therefore, the classification process can be made simple and operated at a high speed.

In accordance with the document classification unit of another mode of the claimed invention, the characteristic vector generation dictionary includes dictionaries of a plurality of languages. Therefore, even in a case where a word is any language of the plurality of languages, a word of the same conception can be converted into the same conceptual identifier, and document classification can be performed independent of the kind of language. In addition, since the characteristic vector is generated with respect to the conceptual identifier, the storage area for the characteristic vector can be minimized as compared with a case where a characteristic vector is generated with respect to a word for each language.

In accordance with the document retrieval unit of the claimed invention, the learning of the document and the classification of the document based on the learning are performed by using the characteristic vector of the conceptual identifier and the characteristic vector of the document generated from the characteristic vector of the conceptual identifier. Therefore, by retrieving a document with the degree of similarity of the characteristic vector, the degree of similarity whose meaning is high could be retrieved (ambiguous retrieval) even if character strings did not match each other, unlike the retrieval of a character string by a pattern matching method.

In accordance with the document retrieval unit of a mode of the claimed invention, the characteristic vector generation dictionary includes dictionaries of a plurality of languages. Therefore, even in a case where a word is any language of the plurality of languages, a word of the same conception can be converted into the same conceptual identifier, and document classification can be performed independent of the kind of language.

Also, since the characteristic vector is generated with respect to the conceptual identifier, the storage area for the characteristic vector can be minimized as compared with a case where a characteristic vector is generated with respect to a word for each language.

In addition, the characteristic vector of the conceptual identifier, generated by the unit of the present invention, can be used not only at the time of the classification or retrieval of a document, but also in the selection of homonyms in a kana-kanji conversion. The present invention can also be utilized in a method of selecting a recognition result most suitable to the past context in the speech recognition and the hand-writing character recognition.

Many widely different embodiments of the present invention may be constructed without departing from the scope of the present invention. It should be understood that the present invention is not limited to the specific embodiments described in the specification, except as defined in the appended claims.

**Claims**

1. A document classification unit for classifying a document in accordance with the contents thereof, comprising:

   a document storage section (101) for storing document data;
   a characteristic vector generation dictionary (109) including dictionaries of a plurality of different languages, each dictionary having registered therein previously determined words and corresponding conceptual identifiers, words in the different languages and of the same conception being associated in the dictionaries with the same conceptual identifier;

a document analysis section (102) for analyzing words of stored document data by using the words of said characteristic vector generation dictionary (109);

a conceptual vector generation section (103) for converting the words of the document data into conceptual identifiers by using the conceptual identifiers of said characteristic vector generation dictionary (109), words in any of said different languages and of the same conception being converted into the same conceptual identifier, and, based on the cooccurrence relationship between the conceptual identifiers, automatically generating characteristic vectors of the conceptual identifiers;

a conceptual vector storage section (104) for storing the generated characteristic vectors of the conceptual identifiers;

a document vector generation section (105) for generating a characteristic vector of the document from the characteristic vectors of the conceptual identifiers;

a document vector storage section (106) for storing the characteristic vector of the document;

a classification section (107) operable in any of said plurality of languages for classifying a said document by making use of the degree of similarity between the characteristic vectors of documents; and

a result storage section (108) for storing a result of the classification.

2. A document classification unit according to Claim 1, further comprising a useful conceptual-identifier selection section (210) for obtaining a frequency of occurrence of the conceptual identifier for each classification stored in said result storage section, selecting the conceptual identifier useful for classification, and registering the useful conceptual identifier in said characteristic vector generation dictionary.

3. A document classification unit according to Claim I or Claim 2, further comprising:

a representative vector generation section (311) for obtaining a characteristic vector of a representative document of each classification stored in said result storage section by using at least either the characteristic vector of the conceptual identifier or the characteristic vector of the document; and

a representative vector storage section (312) for storing the characteristic vector of the representative document.

4. A document retrieval unit, comprising:

a document storage section (1001) for storing document data;

a retrieval sentence input section (1010) for inputting a retrieval sentence;

a characteristic vector generation dictionary (1009) including dictionaries of a plurality of different languages, each dictionary having registered therein previously determined words and corresponding conceptual identifiers, words in the different languages and of the same conception being associated in the dictionaries with the same conceptual identifier;

a document analysis section (1002) for analyzing words of stored document data by using the words of said characteristic vector generation dictionary;

a conceptual vector generation section (1003) for converting the words of the document data into conceptual identifiers by using the conceptual identifiers of said characteristic vector generation dictionary (1009), words in any of said different languages and of the same conception being converted into the same conceptual identifier, and, based on the cooccurrence relationship between the conceptual identifiers, automatically generating characteristic vectors of the conceptual identifiers;

a conceptual vector storage section (1004) for storing the characteristic vectors of the conceptual identifiers;

a document vector generation section (1005) for generating a characteristic vector of the document data and a characteristic vector of the retrieval sentence from the characteristic vectors of the conceptual identifiers included in the document data and the retrieval sentence;

a document vector storage section (1006) for storing the characteristic vector of the document and the characteristic vector of the retrieval sentence;

a retrieval section (1007) operable in any of said plurality of languages for retrieving a sentence similar to the retrieval sentence from the document data by making use of the degree of similarity between the characteristic vector of the document and the characteristic vector of the retrieval sentence; and

an output section (1008) for outputting a result of the retrieval.

**Patentansprüche**

1. Dokumentklassifizierungseinheit zum Klassifizieren eines Dokuments gemäß dessen Inhalt, mit:

- einem Dokumentenspeicherabschnitt (101) zum Speichern von Dokumentendaten;
- einem Charakteristikvektor-Erzeugungswörterbuch (109) mit Wörterbüchern für mehrere verschiedene Sprachen, wobei in jedem Wörterbuch zuvor bestimmte Wörter und entsprechende Begriffskennwörter registriert sind, wobei Wörtern aus den verschiedenen Sprachen, die zum selben Begriff gehören, in den Wörterbüchern dasselbe Begriffskennwort zugeordnet ist;
- einem Dokumentenanalyseabschnitt (102) zum Analysieren von Wörtern gespeicherter Dokumentendaten unter Verwendung der Wörter im Charakteristikvektor-Erzeugungswörterbuch (109);
- einem Begriffsvektor-Erzeugungsabschnitt (103) zum Umsetzen der Wörter der Dokumentendaten in Begriffskennwörter unter Verwendung der Begriffskennwörter im Charakteristikvektor-Erzeugungswörterbuch (109), wobei Wörter in jeder der verschiedenen Sprachen, die zum selben Begriff gehören, in dasselbe Begriffskennwort umgesetzt werden, und wobei, auf Grundlage einer Beziehung gemeinsamen Auftretens hinsichtlich der Begriffskennwörter, Charakteristikvektoren für die Begriffskennwörter automatisch erzeugt werden;
- einem Begriffsvektor-Speicherabschnitt (104) zum Speichern der erzeugten Charakteristikvektoren für die Begriffskennwörter;
- einem Dokumentenvektor-Erzeugungsabschnitt (105) zum Erzeugen eines Charakteristikvektors für das Dokument aus den Charakteristikvektoren für die Begriffskennwörter;
- einem Dokumentenvektor-Speicherabschnitt (106) zum Speichern des Charakteristikvektors für das Dokument;
- einem Klassifizierungsabschnitt (107), der in jeder der mehreren Sprachen betreibbar ist, um das Dokument dadurch zu klassifizieren, dass der Grad der Ähnlichkeit zwischen den Charakteristikvektoren von Dokumenten genutzt wird; und
- einem Ergebnisspeicherabschnitt (108) zum Speichern des Klassifizierungsergebnisses.

2. Dokumentklassifizierungseinheit nach Anspruch 1, ferner mit einem Auswählabschnitt (210) für ein nützliches Begriffskennwort zum Erhalten der Auftrittshäufigkeit des Begriffskennworts für jede im Ergebnisspeicherabschnitt gespeicherte Klassifizierung, zum Auswählen des zur Klassifizierung nützlichen Begriffskennworts und zum Registrieren des nützlichen Begriffskennworts im Charakteristikvektor-Erzeugungswörterbuch.

3. Dokumentklassifizierungseinheit nach Anspruch 1 oder Anspruch 2, ferner mit:

- einem Repräsentativvektor-Erzeugungsabschnitt (311) zum Erhalten eines Charakteristikvektors für ein repräsentatives Dokument zu jeder im Ergebnisspeicherabschnitt gespeicherten Klassifizierung unter Verwendung zumindest entweder des Charakteristikvektors für das Begriffskennwort oder des Charakteristikvektors für das Dokument; und
- einem Repräsentativvektor-Speicherabschnitt (312) zum Speichern des Charakteristikvektors des repräsentativen Dokuments.

4. Dokumentwiederauffindungseinheit mit:

- einem Dokumentenspeicherabschnitt (1001) zum Speichern von Dokumentendaten;
- einem Charakteristikvektor-Erzeugungswörterbuch (1009) mit Wörterbüchern für mehrere verschiedene Sprachen, wobei in jedem Wörterbuch zuvor bestimmte Wörter und entsprechende Begriffskennwörter registriert sind, wobei Wörtern aus den verschiedenen Sprachen, die zum selben Begriff gehören, in den Wörterbüchern dasselbe Begriffskennwort zugeordnet ist;
- einem Dokumentenanalyseabschnitt (1002) zum Analysieren von Wörtern gespeicherter Dokumentendaten unter Verwendung der Wörter im Charakteristikvektor-Erzeugungswörterbuch;
- einem Begriffsvektor-Erzeugungsabschnitt (1003) zum Umsetzen der Wörter der Dokumentendaten in Begriffskennwörter unter Verwendung der Begriffskennwörter im Charakteristikvektor-Erzeugungswörterbuch (1009), wobei Wörter in jeder der verschiedenen Sprachen, die zum selben Begriff gehören, in dasselbe Begriffskennwort umgesetzt werden, und wobei, auf Grundlage einer Beziehung gemeinsamen Auftretens hinsichtlich der Begriffskennwörter, Charakteristikvektoren für die Begriffskennwörter automatisch erzeugt werden;
- einem Begriffsvektor-Speicherabschnitt (1004) zum Speichern der erzeugten Charakteristikvektoren für die Begriffskennwörter;

- einem Dokumentenvektor-Erzeugungsabschnitt (1005) zum Erzeugen eines Charakteristikvektors für die Dokumentendaten und eines Charakteristikvektors für den Wiederauffindsatz aus den Charakteristikvektoren der Begriffskennwörter, die in den Dokumentendaten und dem Wiederauffindsatz enthalten sind;
- einem Dokumentenvektor-Speicherabschnitt (1006) zum Speichern des Charakteristikvektors für das Dokument und des Charakteristikvektors für den Wiederauffindsatz;
- einem Wiederauffindabschnitt (1007), der für jede der mehreren Sprachen betreibbar ist, um aus den Dokumentendaten einem dem Wiederauffindsatz ähnlichen Satz dadurch wiederaufzufinden, dass der Grad der Ähnlichkeit zwischen dem Charakteristikvektor für das Dokument und dem Charakteristikvektor für den Wiederauffindsatz genutzt wird; und
- einem Ausgabeabschnitt (1008) zum Ausgeben des Wiederauffindergebnisses.

**Revendications**

1. Unité de classement de documents destinée à classer un document en fonction de son contenu, comprenant :

   une section de stockage de document (101) destinée à stocker les données du document ;
   un dictionnaire de génération de vecteur caractéristique (109) incluant des dictionnaires d'une pluralité de langues différentes, chaque dictionnaire disposant de l'enregistrement de mots préalablement déterminés et d'identifiants conceptuels correspondants, des mots des différentes langues et de la même conception étant associés dans les dictionnaires avec le même identifiant conceptuel ;
   une section d'analyse de document (102) destinée à l'analyse des mots des données d'un document stocké en utilisant les mots dudit dictionnaire de génération de vecteur caractéristique (109);
   une section de génération de vecteur conceptuel (103) destinée à la conversion des mots des données du document en identifiants conceptuels en utilisant les identifiants conceptuels dudit dictionnaire de génération de vecteur caractéristique (109), les mots d'une quelconque desdites différentes langues et de même concept étant convertis en un identifiant conceptuel identique, et, en fonction de la relation d'occurrence simultanée entre les identifiants conceptuels, la génération automatique des vecteurs caractéristiques des identifiants conceptuels ;
   une section de stockage de vecteurs conceptuels (104) destinée au stockage des vecteurs caractéristiques générés des identifiants conceptuels ;
   une section de génération de vecteur de document (105) destinée à la génération d'un vecteur caractéristique du document à partir des vecteurs caractéristiques des identifiants conceptuels ;
   une section de stockage de vecteur de document (106) destinée au stockage du vecteur caractéristique du document ;
   une section de classement (107) susceptible de fonctionner dans l'une des langues de ladite pluralité de langues pour classer un desdits documents en utilisant le degré de similarité entre les vecteurs caractéristiques des documents ; et
   une section de stockage de résultats (108) destinée au stockage d'un résultat du classement.

2. Unité de classement de documents selon la revendication 1, comprenant en outre une section de sélection utile de concept-identifiant (210) destinée à obtenir une fréquence d'occurrence de l'identifiant conceptuel pour chaque classement stocké dans ladite section de stockage de résultats, à sélectionner l'identifiant conceptuel utile au classement et à enregistrer l'identifiant conceptuel dans ledit dictionnaire de génération de vecteur caractéristique.

3. Unité de classement de documents selon la revendication 1 ou la revendication 2, comprenant en outre :

   une section de génération de vecteur représentatif (311) destinée à obtenir un vecteur caractéristique d'un document représentatif de chaque classement stocké dans ladite section de stockage de résultats en utilisant au moins au choix le vecteur caractéristique de l'identifiant conceptuel ou le vecteur caractéristique du document ; et
   une section de stockage de vecteur représentatif (312) destinée à stocker le vecteur caractéristique du document représentatif.

4. Unité de recouvrement de document comprenant :

   une section de stockage de document (1001) destinée à stocker les données du document ;
   une section de saisie de phrases à recouvrer (1010) destinée à saisir une phrase à recouvrer ;

un dictionnaire de génération de vecteur caractéristique (1009) incluant des dictionnaires d'une pluralité de langues différentes, chaque dictionnaire disposant de l'enregistrement de mots préalablement déterminés et d'identifiants conceptuels correspondants, des mots des différentes langues et de même conception étant associés dans les dictionnaires avec le même identifiant conceptuel ;

une section d'analyse de document (1002) destinée à l'analyse des mots des données d'un document stocké en utilisant les mots dudit dictionnaire de génération de vecteur caractéristique ;

une section de génération de vecteur conceptuel (1003) destinée à la conversion des mots des données du document en identifiants conceptuels en utilisant les identifiants conceptuels dudit dictionnaire de génération de vecteur caractéristique (1009), les mots d'une quelconque desdites différentes langues et de même conception étant convertis en un identifiant conceptuel identique, et, en fonction de la relation d'occurrence simultanée entre les identifiants conceptuels, la génération automatique des vecteurs caractéristiques des identifiants conceptuels ;

une section de stockage de vecteurs conceptuels (1004) destinée au stockage des vecteurs caractéristiques générés pour les identifiants conceptuels ;

une section de génération de vecteur de document (1005) destinée à la génération d'un vecteur caractéristique des données du document et d'un vecteur caractéristique de la phrase à recouvrer à partir des vecteurs caractéristiques des identifiants conceptuels inclus dans les données du document et la phrase à recouvrer ;

une section de stockage de vecteurs de document (1006) destinée au stockage du vecteur caractéristique du document et du vecteur caractéristique de la phrase à recouvrer ;

une section de recouvrement (1007) susceptible de fonctionner dans l'une des langues de ladite pluralité de langues destinée à recouvrer une phrase similaire à la phrase à recouvrer à partir des données du document en utilisant le degré de similarité entre le vecteur caractéristique du document et le vecteur caractéristique de la phrase à recouvrer ; et

une section de sortie (1008) destinée à produire un résultat de recouvrement.

# FIG. 1A

109

CHARACTERISTIC VECTOR GENERATION DICTIONARY

101
DOCUMENT STORAGE SECTION

102
DOCUMENT ANALYSIS SECTION

103
CONCEPTUAL VECTOR GENERATION SECTION

104
CONCEPTUAL VECTOR STORAGE SECTION

105
DOCUMENT VECTOR GENERATION SECTION

106
DOCUMENT VECTOR STORAGE SECTION

107
CLASSIFICATION SECTION

108
RESULT STORAGE SECTION

# FIG. 1B

109

CHARACTERISTIC VECTOR GENERATION DICTIONARY

101
DOCUMENT STORAGE SECTION

102
DOCUMENT ANALYSIS SECTION

103
CONCEPTUAL VECTOR GENERATION SECTION

104
CONCEPTUAL VECTOR STORAGE SECTION

# FIG. 1C

109
CHARACTERISTIC VECTOR GENERATION DICTIONARY

104
CONCEPTUAL VECTOR STORAGE SECTION

101
DOCUMENT STORAGE SECTION

102
DOCUMENT ANALYSIS SECTION

105
DOCUMENT VECTOR GENERATION SECTION

106
DOCUMENT VECTOR STORAGE SECTION

107
CLASSIFICATION SECTION

108
RESULT STORAGE SECTION

# FIG. 2A

# FIG. 2B

209

CHARACTERISTIC VECTOR GENERATION DICTIONARY

201

DOCUMENT STORAGE SECTION

202

DOCUMENT ANALYSIS SECTION

203

CONCEPTUAL VECTOR GENERATION SECTION

204

CONCEPTUAL VECTOR STORAGE SECTION

(A)

# FIG. 2C

209

CHARACTERISTIC VECTOR GENERATION DICTIONARY

204

CONCEPTUAL VECTOR STORAGE SECTION

210

(A)

USEFUL CONCEPTUAL-IDENTIFIER SELECTION SECTION

DOCUMENT STORAGE -SECTION

201

DOCUMENT ANALYSIS SECTION

202

DOCUMENT VECTOR GENERATION SECTION

205

DOCUMENT VECTOR STORAGE SECTION

206

CLASSIFICATION SECTION

207

RESULT STORAGE SECTION

208

| FIG. 2B |
| FIG. 2C |

23

# FIG. 3A

309 CHARACTERISTIC VECTOR GENERATION DICTIONARY

301 DOCUMENT STORAGE SECTION

302 DOCUMENT ANALYSIS SECTION

303 CONCEPTUAL VECTOR GENERATION SECTION

304 CONCEPTUAL VECTOR STORAGE SECTION

310 USEFUL CONCEPTUAL-IDENTIFIER SELECTION SECTION

305 DOCUMENT VECTOR GENERATION SECTION

306 DOCUMENT VECTOR STORAGE SECTION

307 CLASSIFICATION SECTION

308 RESULT STORAGE SECTION

312 REPRESENTATIVE VECTOR STORAGE SECTION

311 REPRESENTATIVE VECTOR GENERATION SECTION

# FIG. 3B

309
┌─────────────────┐
│ CHARACTERISTIC  │
│     VECTOR      │
│   GENERATION    │
│   DICTIONARY    │
└─────────────────┘

301 — DOCUMENT STORAGE SECTION

302 — DOCUMENT ANALYSIS SECTION

303 — CONCEPTUAL VECTOR GENERATION SECTION

304 — CONCEPTUAL VECTOR STORAGE SECTION

(A)

# FIG. 3C

309 — CHARACTERISTIC VECTOR GENERATION DICTIONARY

304 — CONCEPTUAL VECTOR STORAGE SECTION

310 — USEFUL CONCEPTUAL-IDENTIFIER SELECTION SECTION

(A)

301 — DOCUMENT STORAGE SECTION

302 — DOCUMENT ANALYSIS SECTION

305 — DOCUMENT VECTOR GENERATION SECTION

306 — DOCUMENT VECTOR STORAGE SECTION

307 — CLASSIFICATION SECTION

308 — RESULT STORAGE SECTION

312 — REPRESENTATIVE VECTOR STORAGE SECTION

311 — REPRESENTATIVE VECTOR GENERATION SECTION

| FIG. 3B |
|---------|
| FIG. 3C |

# FIG. 4

| | AMERICAN | GOVERNMENT | ADVANCED | MAIN | NATION | COCOM | REGURATION | DRASTIC | RECONSIDERATION | PROPOSITION | OBJECT | FIGHTING IMPLEMENT | MAKE | INDUSTRY | MANUFACTURED GOODS | EXPORT | CONDITION | KIND OF GOODS | SHARPLY | REDUCTION | INTENTION |
|---|---|---|---|---|---|---|---|---|---|---|---|---|---|---|---|---|---|---|---|---|---|
| AMERICAN | 1 | 1 | 1 | 1 | 1 | 1 | 1 | 1 | 1 | 1 | 0 | 0 | 0 | 0 | 0 | 0 | 0 | 0 | 0 | 0 | 0 |
| GOVERNMENT | 1 | 1 | 1 | 1 | 1 | 1 | 1 | 1 | 1 | 1 | 0 | 0 | 0 | 0 | 0 | 0 | 0 | 0 | 0 | 0 | 0 |
| ADVANCED | 1 | 1 | 1 | 1 | 1 | 1 | 1 | 1 | 1 | 1 | 0 | 0 | 0 | 0 | 0 | 0 | 0 | 0 | 0 | 0 | 0 |
| MAIN | 1 | 1 | 1 | 1 | 1 | 1 | 1 | 1 | 1 | 1 | 0 | 0 | 0 | 0 | 0 | 0 | 0 | 0 | 0 | 0 | 0 |
| NATION | 1 | 1 | 1 | 1 | 1 | 1 | 1 | 1 | 1 | 1 | 0 | 0 | 0 | 0 | 0 | 0 | 0 | 0 | 0 | 0 | 0 |
| COCOM | 1 | 1 | 1 | 1 | 1 | 1 | 1 | 1 | 1 | 1 | 0 | 0 | 0 | 0 | 0 | 0 | 0 | 0 | 0 | 0 | 0 |
| REGULATION | 1 | 1 | 1 | 1 | 1 | 1 | 1 | 1 | 1 | 1 | 0 | 0 | 0 | 0 | 0 | 0 | 0 | 0 | 0 | 0 | 0 |
| DRASTIC | 1 | 1 | 1 | 1 | 1 | 1 | 1 | 1 | 1 | 1 | 0 | 0 | 0 | 0 | 0 | 0 | 0 | 0 | 0 | 0 | 0 |
| RECONSIDERATION | 1 | 1 | 1 | 1 | 1 | 1 | 1 | 1 | 1 | 1 | 0 | 0 | 0 | 0 | 0 | 0 | 0 | 0 | 0 | 0 | 0 |
| PROPOSITION | 1 | 1 | 1 | 1 | 1 | 1 | 1 | 1 | 1 | 1 | 0 | 0 | 0 | 0 | 0 | 0 | 0 | 0 | 0 | 0 | 0 |
| OBJECT | 0 | 0 | 0 | 0 | 0 | 0 | 0 | 0 | 0 | 0 | 0 | 0 | 0 | 0 | 0 | 0 | 0 | 0 | 0 | 0 | 0 |
| FIGHTING IMPLEMENT | 0 | 0 | 0 | 0 | 0 | 0 | 0 | 0 | 0 | 0 | 0 | 0 | 0 | 0 | 0 | 0 | 0 | 0 | 0 | 0 | 0 |
| MAKE | 0 | 0 | 0 | 0 | 0 | 0 | 0 | 0 | 0 | 0 | 0 | 0 | 0 | 0 | 0 | 0 | 0 | 0 | 0 | 0 | 0 |
| INDUSTRY | 0 | 0 | 0 | 0 | 0 | 0 | 0 | 0 | 0 | 0 | 0 | 0 | 0 | 0 | 0 | 0 | 0 | 0 | 0 | 0 | 0 |
| MANUFACTURED GOODS | 0 | 0 | 0 | 0 | 0 | 0 | 0 | 0 | 0 | 0 | 0 | 0 | 0 | 0 | 0 | 0 | 0 | 0 | 0 | 0 | 0 |
| EXPORT | 0 | 0 | 0 | 0 | 0 | 0 | 0 | 0 | 0 | 0 | 0 | 0 | 0 | 0 | 0 | 0 | 0 | 0 | 0 | 0 | 0 |
| CONDITION | 0 | 0 | 0 | 0 | 0 | 0 | 0 | 0 | 0 | 0 | 0 | 0 | 0 | 0 | 0 | 0 | 0 | 0 | 0 | 0 | 0 |
| KIND OF GOODS | 0 | 0 | 0 | 0 | 0 | 0 | 0 | 0 | 0 | 0 | 0 | 0 | 0 | 0 | 0 | 0 | 0 | 0 | 0 | 0 | 0 |
| SHARPLY | 0 | 0 | 0 | 0 | 0 | 0 | 0 | 0 | 0 | 0 | 0 | 0 | 0 | 0 | 0 | 0 | 0 | 0 | 0 | 0 | 0 |
| REDUCTION | 0 | 0 | 0 | 0 | 0 | 0 | 0 | 0 | 0 | 0 | 0 | 0 | 0 | 0 | 0 | 0 | 0 | 0 | 0 | 0 | 0 |
| INTENTION | 0 | 0 | 0 | 0 | 0 | 0 | 0 | 0 | 0 | 0 | 0 | 0 | 0 | 0 | 0 | 0 | 0 | 0 | 0 | 0 | 0 |

ILLUSTRATIVE SENTENCE·A :
" THE AMERICAN GOVERNMENT HAS PROPOSED DRASTIC RECONSIDERATION IN COCOM REGULATION TO PRINCIPAL ADVANCED COUNTRIES."

CONCEPTUAL IDENTIFIERS EXTRACTED FROM THE ILLUSTRATIVE SENTENCE·A :

" AMERICAN" " GOVERNMENT" " ADVANCED" " MAIN" " NATION" " COCOM" " REGURATION" " DRASTIC" " RECONSIDERATION" " PROPOSITION"

# FIG. 5

| | AMERICAN | GOVERNMENT | ADVANCED | MAIN | NATION | COCOM | REGURATION | DRASTIC | RECONSIDERATION | PROPOSITION | OBJECT | FIGHTING IMPLEMENT | MAKE | INDUSTRY | MANUFACTURED GOODS | EXPORT | CONDITION | KIND OF GOODS | SHARPLY | REDUCTION | INTENTION |
|---|---|---|---|---|---|---|---|---|---|---|---|---|---|---|---|---|---|---|---|---|---|
| AMERICAN | 1 | 1 | 1 | 1 | 1 | 1 | 1 | 1 | 1 | 1 | 0 | 0 | 0 | 0 | 0 | 0 | 0 | 0 | 0 | 0 | 0 |
| GOVERNMENT | 1 | 1 | 1 | 1 | 1 | 1 | 1 | 1 | 1 | 1 | 0 | 0 | 0 | 0 | 0 | 0 | 0 | 0 | 0 | 0 | 0 |
| ADVANCED | 1 | 1 | 1 | 1 | 1 | 1 | 1 | 1 | 1 | 1 | 0 | 0 | 0 | 0 | 0 | 0 | 0 | 0 | 0 | 0 | 0 |
| MAIN | 1 | 1 | 1 | 1 | 1 | 1 | 1 | 1 | 1 | 1 | 0 | 0 | 0 | 0 | 0 | 0 | 0 | 0 | 0 | 0 | 0 |
| NATION | 1 | 1 | 1 | 1 | 2 | 2 | 4 | 1 | 1 | 1 | 1 | 1 | 1 | 1 | 1 | 1 | 1 | 1 | 1 | 1 | 1 |
| COCOM | 1 | 1 | 1 | 1 | 2 | 2 | 4 | 1 | 1 | 1 | 1 | 1 | 1 | 1 | 1 | 1 | 1 | 1 | 1 | 1 | 1 |
| REGULATION | 1 | 1 | 1 | 1 | 4 | 4 | 10 | 1 | 1 | 1 | 3 | 3 | 3 | 3 | 3 | 3 | 3 | 3 | 3 | 3 | 3 |
| DRASTIC | 1 | 1 | 1 | 1 | 1 | 1 | 1 | 1 | 1 | 1 | 0 | 0 | 0 | 0 | 0 | 0 | 0 | 0 | 0 | 0 | 0 |
| RECONSIDERATION | 1 | 1 | 1 | 1 | 1 | 1 | 1 | 1 | 1 | 1 | 0 | 0 | 0 | 0 | 0 | 0 | 0 | 0 | 0 | 0 | 0 |
| PROPOSITION | 1 | 1 | 1 | 1 | 1 | 1 | 1 | 1 | 1 | 1 | 0 | 0 | 0 | 0 | 0 | 0 | 0 | 0 | 0 | 0 | 0 |
| OBJECT | 0 | 0 | 0 | 0 | 1 | 1 | 3 | 0 | 0 | 0 | 1 | 1 | 1 | 1 | 1 | 1 | 1 | 1 | 1 | 1 | 1 |
| FIGHTING IMPLEMENT | 0 | 0 | 0 | 0 | 1 | 1 | 3 | 0 | 0 | 0 | 1 | 1 | 1 | 1 | 1 | 1 | 1 | 1 | 1 | 1 | 1 |
| MAKE | 0 | 0 | 0 | 0 | 1 | 1 | 3 | 0 | 0 | 0 | 1 | 1 | 1 | 1 | 1 | 1 | 1 | 1 | 1 | 1 | 1 |
| INDUSTRY | 0 | 0 | 0 | 0 | 1 | 1 | 3 | 0 | 0 | 0 | 1 | 1 | 1 | 1 | 1 | 1 | 1 | 1 | 1 | 1 | 1 |
| MANUFACTURED GOODS | 0 | 0 | 0 | 0 | 1 | 1 | 3 | 0 | 0 | 0 | 1 | 1 | 1 | 1 | 1 | 1 | 1 | 1 | 1 | 1 | 1 |
| EXPORT | 0 | 0 | 0 | 0 | 1 | 1 | 3 | 0 | 0 | 0 | 1 | 1 | 1 | 1 | 1 | 1 | 1 | 1 | 1 | 1 | 1 |
| CONDITION | 0 | 0 | 0 | 0 | 1 | 1 | 3 | 0 | 0 | 0 | 1 | 1 | 1 | 1 | 1 | 1 | 1 | 1 | 1 | 1 | 1 |
| KIND OF GOODS | 0 | 0 | 0 | 0 | 1 | 1 | 3 | 0 | 0 | 0 | 1 | 1 | 1 | 1 | 1 | 1 | 1 | 1 | 1 | 1 | 1 |
| SHARPLY | 0 | 0 | 0 | 0 | 1 | 1 | 3 | 0 | 0 | 0 | 1 | 1 | 1 | 1 | 1 | 1 | 1 | 1 | 1 | 1 | 1 |
| REDUCTION | 0 | 0 | 0 | 0 | 1 | 1 | 3 | 0 | 0 | 0 | 1 | 1 | 1 | 1 | 1 | 1 | 1 | 1 | 1 | 1 | 1 |
| INTENTION | 0 | 0 | 0 | 0 | 1 | 1 | 3 | 0 | 0 | 0 | 1 | 1 | 1 | 1 | 1 | 1 | 1 | 1 | 1 | 1 | 1 |

ILLUSTRATIVE SENTENCE-A :
" THE AMERICAN GOVERNMENT HAS PROPOSED DRASTIC RECONSIDERATION
IN COCOM REGULATION TO PRINCIPAL ADVANCED COUNTRIES."

ILLUSTRATIVE SENTENCE-B :
" THE INTENTION SEEMS TO SHARPLY REDUCE THE REGULATED ITEMS OF THE COCOM,
ON THE CONDITION THAT THE EXPORT OF INDUSTRIAL MANUFACTURED GOODS,
WHICH LEADS TO THE MANUFACTURE OF WEAPONS OF THE COUNTRIES OF AN OBJECT
OF REGULATION, IS REGULATED."

CONCEPTUAL IDENTIFIERS EXTRACTED FROM THE ILLUSTRATIVE SENTENCE-A :

| |
|---|
| " AMERICAN" " GOVERNMENT" " ADVANCED" " MAIN" " NATION" " COCOM" " REGURATION" " DRASTIC" " RECONSIDERATION" " PROPOSITION" |

CONCEPTUAL IDENTIFIERS EXTRACTED FROM THE ILLUSTRATIVE SENTENCE-B :

| |
|---|
| " REGULATION" " OBJECT" " NATION" " FIGHTING IMPLEMENT" " MAKE" " INDUSTRY" " MANUFACTURED GOODS" " EXPORT" " REGULATION" " CONDITION" " COCOM" " REGULATION" " KIND OF GOODS" " SHARPLY" " REDUCTION" " INTENTION" |

# FIG. 6

```
AMERICAN              ( 1 1 1 1 1 1 1 1 1 1 0 0 0 0 0 0 0 0 0 0 )
GOVERNMENT            ( 1 1 1 1 1 1 1 1 1 1 0 0 0 0 0 0 0 0 0 0 )
FIGHTING IMPLEMENT    ( 0 0 0 0 1 1 3 0 0 0 1 1 1 1 1 1 1 1 1 1 )
REDUCTION             ( 0 0 0 0 1 1 3 0 0 0 1 1 1 1 1 1 1 1 1 1 )
+) PROPOSITION        ( 1 1 1 1 1 1 1 1 1 1 0 0 0 0 0 0 0 0 0 0 )
```
_____
CHARACTERISTIC VECTOR   ( 3 3 3 3 5 5 9 3 3 3 2 2 2 2 2 2 2 2 2 2 )
OF ILLUSTRATIVE SENTENCE-C

ILLUSTRATIVE SENTENCE-C :
" THE AMERICAN GOVERNMENT HAS PROPOSED THE REDUCTION OF WEAPONS."

CONCEPTUAL IDENTIFIERS EXTRACTED FROM THE ILLUSTRATIVE SENTENCE-A :

| " AMERIAN"  " GOVERNMENT"  " FIGHTING IMPLEMENT"<br>" REDUCTION"  " PROPOSITION" |
| --- |

# FIG. 7

CHARACTERISTIC VECTOR OF ILLUSTRATIVE SENTENCE-C :

( 3 3 3 3 5 5 9 3 3 3 2 2 2 2 2 2 2 2 2 2 )

REPRESENTATIVE VECTOR OF
        CLASSIFICATION GROUP 1 ( 1 1 1 1 0 0 0 0 0 0 0 0 0 0 0 0 0 1 1 1 1 )
REPRESENTATIVE VECTOR OF
        CLASSIFICATION GROUP 2 ( 1 1 1 1 1 1 1 1 1 1 5 5 5 5 5 5 5 5 5 5 )
REPRESENTATIVE VECTOR OF
        CLASSIFICATION GROUP 3 ( 4 4 4 4 6 6 6 3 3 3 1 1 1 1 1 1 1 1 1 1 )

ILLUSTRATIVE
SENTENCE-C

CLASSIFICATION GROUP 1

CLASSIFICATION GROUP 2

CLASSIFICATION GROUP 3

# FIG. 8

ILLUSTRATIVE SENTENCE·D :
A DIFFERENCE HAS OCCURRED IN THE BOND INVESTMENT  ATTITUDES OF LARGE INSURANCE AGENCIES.

CHARACTERISTIC VECTOR OF ILLUSTRATIVE SENTENCE·D :
( 3 3 3 3 5 5 9 3 3 3 2 2 2 2 2 2 2 2 2 2 2 )

↓

| | |
|---|---|
| REPRESENTATIVE VECTOR OF "POLITICS" | ( 1 1 1 1 0 0 0 0 0 0 0 0 0 0 0 0 0 1 1 1 1 ) |
| REPRESENTATIVE VECTOR OF "INTERNATIONAL INTERCOURSE" | ( 1 1 1 1 1 1 1 1 1 1 5 5 5 5 5 5 5 5 5 5 5 ) |
| REPRESENTATIVE VECTOR OF "ECONOMY" | ( 4 4 4 4 6 6 6 3 3 3 1 1 1 1 1 1 1 1 1 1 1 ) |

↓

ILLUSTRATIVE
SENTENCE·D

"POLITICS"    "INTERNATIONAL INTERCOURSE"    "ECONOMY"

SYSTEM :
INPUT A SENTENCE THAT IS DESIRED TO BE CLASSIFIED

USER :
A DIFFERENCE HAS OCCURRED IN THE BOND INVESTMENT
ATTITUDES OF LARGE INSURANCE AGENCIES.

SYSTEM :
DEGREE OF SIMILARITY WITH "POLITICS"                           0.4583
DEGREE OF SIMILARITY WITH "INTERNATIONAL INTERCOURSE"  0.5759
DEGREE OF SIMILARITY WITH "ECONOMY"                           0.9438
IT IS CLASSIFIED TO "ECONOMY"

SYSTEM :
INPUT A SENTENCE THAT IS DESIRED TO BE CLASSIFIED

USER :

# FIG. 9

| | | | | | | | |
|---|---|---|---|---|---|---|---|
| 私 | 0001 | I | 0001 | ich | 0001 |
| 僕 | 0001 | you | 0002, 0006 | Sie | 0002 |
| 俺 | 0001 | we | 0005 | wir | 0005 |
| 君 | 0002 | red | 0105 | Ihr | 0006 |
| 貴方 | 0002 | | • | rot | 0105 |
| 我々 | 0005 | | • | | • |
| 私達 | 0005 | | • | | • |
| 僕達 | 0005 | | | | • |
| 俺達 | 0005 | | | | |
| 君達 | 0006 | | | | |
| 貴方達 | 0006 | | | | |
| 赤い | 0105 | | | | |
| | • | | | | |
| | • | | | | |

JAPANESE DICTIONRY     AMERICAN DICTIONRY     GERMAN DICTIONRY

# FIG. 10A

# FIG. 10B

# FIG. 10C

# FIG. 11A

SYSTEM : INPUT A RETRIEVAL SENTENCE TO PERFORM AMBIGUOUS RETRIEVAL.

USER : UTA WO UTAITAI. (I WANT TO SING.)

SYSTEM : THE FOLLOWING MAIL WAS RETRIEVED WITH A DEGREE OF SIMILARITY OF 0.9541.

FROM : TARO HAYAKAWA
SUBJECT : INFORMATION ON A CHORUS (KARAOKE) PARTY
DATE : 18 : 00, MAY 10
PLACE : MULTIPUROSE HALL
 THERE WILL BE HELD THE CHORUS PARTY AT THE MULTIPURPOSE
 HALL ON MAY 10.
JOIN THE PARTY.

SYSTEM : NO OTHER MAILS HAVE BEEN FOUND.

# FIG. 11B

SYSTEM : INPUT A RETRIEVAL SENTENCE TO PERFORM AMBIGUOUS RETRIEVAL.

USER : I WANT TO SING. (IN ENGLISH)

SYSTEM : THE FOLLOWING MAIL WAS RETRIEVED WITH A DEGREE OF SIMILARITY OF 0.9053.

FROM : TARO HAYAKAWA
SUBJECT : INFORMATION ON A CHORUS (KARAOKE) PARTY
DATE : 18 : 00, MAY 10
PLACE : MULTIPUROSE HALL
 THERE WILL BE HELD THE CHORUS PARTY AT THE MULTIPURPOSE
 HALL ON MAY 10.
JOIN THE PARTY.

SYSTEM : NO OTHER MAILS HAVE BEEN FOUND.

# FIG. 12A

SYSTEM : INPUT A RETRIEVAL SENTENCE TO PERFORM AMBIGUOUS RETRIEVAL.

USER : UTA WO UTAITAI. (I WANT TO SING.)

SYSTEM : TWO MAILS WERE RETRIEVED.

| CANDIDATE No. | DEGREE OF SIMILARITY | SUBJECT |
|---|---|---|
| 1 | 0.9541 | INFORMATION ON CHORUS PARTY |
| 2 | 0.9156 | JOIN THE CHORUS PARTY |

SYSTEM : OUTPUT THE FIRST CANDIDATE? (Y/N).

USER : Y

# FIG. 12B

SYSTEM : THE FIRST CANDIDATE IS THE FOLLOWING MAIL WITH A DEGREE OF SIMILARITY OF 0.9541.

FROM : TARO HAYAKAWA
SUBJECT : INFORMATION ON A CHORUS (KARAOKE) PARTY
DATE : 18 : 00, MAY 10
PLACE : MULTIPUROSE HALL
 THERE WILL BE HELD THE CHORUS PARTY AT THE MULTIPURPOSE HALL ON MAY 10.
JOIN THE PARTY.

SYSTEM : OUTPUT THE SECOND CANDIDATE? (Y/N).

USER : Y

# FIG. 12C

SYSTEM : THE SECOND CANDIDATE IS THE FOLLOWING MAIL WITH A DEGREE OF SIMILARITY OF 0.9156.

FROM : MARK EDWARD
SUBJECT : JOIN THE CHORUS PARTY
DATE : SUN, 12 MAY

 THERE WILL BE HELD THE CHORUS PARTY AT THE 4TH HALL ON NEXT SUNDAY EVENING.
CAN YOU JOIN?

SYSTEM : THE OUTPUT OF ALL OF THE RETRIEVED MAILS HAS BEEN COMPLETED.